(19) Europäisches Patentamt
European Patent Office
Office européen des brevets

(11) EP 3 875 508 A1

(12) EUROPEAN PATENT APPLICATION

(43) Date of publication:
**08.09.2021 Bulletin 2021/36**

(21) Application number: **21156679.9**

(22) Date of filing: **11.02.2021**

(51) Int Cl.:
***C08G 18/24*** *(2006.01)* ***C08G 18/32*** *(2006.01)*
***C08G 18/42*** *(2006.01)* ***C08G 18/48*** *(2006.01)*
***C08G 18/64*** *(2006.01)* ***C08G 18/66*** *(2006.01)*
***C08G 18/67*** *(2006.01)* ***C08G 18/73*** *(2006.01)*
***C08G 18/75*** *(2006.01)* ***C08G 18/78*** *(2006.01)*
***C08G 18/79*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.03.2020 JP 2020037233**
**04.03.2020 JP 2020037234**

(71) Applicant: **Sumitomo Rubber Industries, Ltd.**
**Kobe-shi, Hyogo-ken 651-0072 (JP)**

(72) Inventors:
- **NAITO, Yasuo**
  **Kobe-shi, Hyogo 651-0072 (JP)**
- **OKA, Yuko**
  **Kobe-shi, Hyogo 651-0072 (JP)**
- **TARAO, Toshiyuki**
  **Kobe-shi, Hyogo 651-0072 (JP)**
- **SHIGA, Kazuyoshi**
  **Kobe-shi, Hyogo 651-0072 (JP)**
- **INOUE, Hidetaka**
  **Kobe-shi, Hyogo 651-0072 (JP)**
- **KAMINO, Kazuya**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

# (54) GOLF BALL

(57) An object of the present invention is to provide a golf ball having excellent spin performance on approach shots from the rough (under a condition that there is grass between the golf ball and the club face) and excellent stain resistance. The present invention provides a golf ball comprising a golf ball body and a paint film composed of at least one layer and formed on a surface of the golf ball body, wherein at least one layer of the paint film includes, as a base resin, a polyurethane obtained by a reaction between a polyisocyanate composition and a polyol composition, and the polyol composition contains, as a polyol component, a polyrotaxane having at least two hydroxyl groups and a urethane polyol.

EP 3 875 508 A1

Printed by Jouve, 75001 PARIS (FR)

## Description

### FIELD OF THE INVENTION

The present invention relates to a golf ball having a paint film.

### DESCRIPTION OF THE RELATED ART

Conventionally, a golf ball has a paint film formed on a surface of a golf ball body. It has been proposed to improve controllability on approach shots by improving the paint film.

For example, JP 2016-093386 A discloses a golf ball comprising a golf ball body and a paint film formed on a surface of the golf ball body, wherein the paint film is formed from a curing type paint composition containing a base material including a polyrotaxane and a curing agent including a polyisocyanate, the polyrotaxane has a cyclodextrin, a linear molecule piercing through the cyclic structure of the cyclodextrin, and blocking groups located at both terminals of the linear molecule to prevent disassociation of the cyclodextrin, and at least a part of hydroxyl groups of the cyclodextrin is modified with a caprolactone chain via a $-O-C_3H_6-O-$ group.

JP 2017-209298 A discloses a golf ball comprising a golf ball body and a paint film covering the golf ball body, wherein a loss tangent tanδ obtained by measuring a dynamic viscoelasticity of the paint film has a peak temperature of 50 °C or less and a peak height of less than 0.8.

JP 2019-097713 A discloses a golf ball comprising a golf ball body having a cover and a paint film covering the golf ball body, wherein 10% elastic modulus of the paint film is 75 kgf/cm$^2$ or less, storage elastic modulus (E'150) at 150 °C obtained by measuring dynamic viscoelasticity of the paint film is $1.0 \times 10^7$ Pa or more, an indentation depth measured with a nanoindenter, of the paint film in a state of being formed on the surface of the golf ball body, is 1250 nm or more, and the cover has a material hardness of less than 50 in Shore D hardness.

JP 2019-098150 A discloses a golf ball comprising a golf ball body and a paint film covering the golf ball body, wherein 10% elastic modulus of the paint film is 75 kgf/cm$^2$ or less, storage elastic modulus (E'150) at 150 °C obtained by measuring dynamic viscoelasticity of the paint film is $1.0 \times 10^7$ Pa or more, an indentation depth measured with a nanoindenter, of the paint film in a state of being formed on the surface of the golf ball body, is 1250 nm or more, and the golf ball has a diameter from 40 mm to 45 mm and a compression deformation amount of more than 3.0 mm when being applied a load from 98 N as an initial load to 1275 N as a final load.

JP 2015-126772 A discloses a golf ball comprising a golf ball body and a paint film formed on a surface of the golf ball body, wherein a base resin constituting the paint film is a polyurethane obtained by a reaction between a polyol composition and a polyisocyanate composition, the polyol composition contains a urethane polyol, the urethane polyol includes a polyether diol having a number average molecular weight from 800 to 3000 as a constituent component, the paint film has 10% elastic modulus of 100 kgf/cm$^2$ or less, and the 10% elastic modulus (kgf/cm$^2$) of the paint film and a molar ratio (NCO/OH) of isocyanate groups (NCO group) included in the polyisocyanate composition to hydroxyl groups (OH group) included in the polyol composition satisfy a relationship of the following formula (1):

$$Y \leq 200 \times X - 75 \cdots\cdots (1)$$

[In the formula, Y represents the 10% elastic modulus (kgf/cm$^2$) of the paint film, X represents the molar ratio (NCO/OH) of isocyanate groups (NCO group) included in the polyisocyanate composition to hydroxyl groups (OH group) included in the polyol composition.]

### SUMMARY OF THE INVENTION

For example, it is difficult to spin a golf ball on approach shots on a rainy day or on approach shots from the rough. Further, if the spin performance on approach shots is increased by improving the paint film, a problem that the golf ball surface sometimes stains when the golf ball is hit from the rough or bunker.

The present invention has been made in view of the abovementioned circumstances, and an object of the present invention is to provide a golf ball having excellent spin performance on approach shots from the rough (under a condition that there is grass between the golf ball and the club face) and excellent stain resistance.

The present invention has been made in view of the abovementioned circumstances, and another object of the present invention is to provide a golf ball having excellent spin performance on approach shots under a wet condition, excellent spin performance on approach shots from the rough (under a condition that there is grass between the golf ball and the club face), and excellent stain resistance.

The present invention that has solved the above problem provides a golf ball comprising a golf ball body and

a paint film composed of at least one layer and formed on a surface of the golf ball body, wherein at least one layer of the paint film includes, as a base resin, a polyurethane obtained by a reaction between a polyisocyanate composition and a polyol composition, and the polyol composition contains, as a polyol component, a polyrotaxane having at least two hydroxyl groups and a urethane polyol.

According to the present invention, a golf ball having excellent spin performance on approach shots from the rough (under a condition that there is grass between the golf ball and the club face) and excellent stain resistance is obtained.

According to the present invention, a golf ball having excellent spin performance on approach shots under a wet condition, excellent spin performance on approach shots under a condition that there is grass between the golf ball and the club face, and excellent stain resistance is obtained.

## BRIEF DESCRIPTION OF THE DRAWINGS

Fig. 1 is an illustration figure showing a molecular structure of one example of the polyrotaxane used in the present invention;

Fig. 2 is a partially cutaway cross-sectional view showing a golf ball according to one embodiment of the present invention;

Fig. 3 is a schematic enlarged view showing a part of a golf ball according to one embodiment of the present invention;

Fig. 4 is a schematic cross-sectional view illustrating a measuring location of a thickness of a paint film; and

Fig. 5 is a schematic cross-sectional view illustrating a measuring location of a thickness of a paint film.

## DESCRIPTION OF THE PREFERRED EMBODIMENT

The present invention provides a golf ball comprising a golf ball body and a paint film composed of at least one layer and formed on a surface of the golf ball body, wherein at least one layer of the paint film includes, as a base resin, a polyurethane obtained by a reaction between a polyisocyanate composition and a polyol composition, and the polyol composition contains, as a polyol component, a polyrotaxane having at least two hydroxyl groups and a urethane polyol.

The amount of the polyurethane in the base resin is preferably 50 mass % or more, more preferably 70 mass % or more, and even more preferably 90 mass % or more. It is also preferable that the base resin essentially consists of the polyurethane.

(Polyurethane)

In the golf ball according to the present invention, at least one layer of the paint film includes a polyurethane obtained by a reaction between a polyisocyanate composition and a polyol composition. The layer of the paint film is preferably formed from a paint containing the polyol composition and the polyisocyanate composition. Examples of the paint include a so-called curing type urethane paint having the polyol composition as a base material, and the polyisocyanate composition as a curing agent.

(Polyol composition)

The polyol composition used in the present invention contains, as a polyol component, a polyrotaxane having at least two hydroxyl groups and a urethane polyol. Herein, the polyol is, for example, a compound having two or more hydroxyl groups in the molecule.

(Urethane polyol)

The urethane polyol is a compound having a plurality of urethane bonds in the molecule thereof, and having two or more hydroxyl groups in one molecule thereof. Examples of the urethane polyol include a urethane prepolymer obtained by a reaction between a first polyol component and a first polyisocyanate component under a condition that the amount of the hydroxyl group included in the first polyol component is excessive to the amount of the isocyanate group included in the first polyisocyanate component.

Examples of the first polyol component constituting the urethane polyol include a low molecular weight polyol having a molecular weight of less than 500, and a high molecular weight polyol having a number average molecular weight of 500 or more.

Examples of the high molecular weight polyol include a polyether polyol, a polyester polyol, a polycaprolactone

polyol, a polycarbonate polyol, and an acrylic polyol. Examples of the polyether polyol include polyoxyethylene glycol (PEG), polyoxypropylene glycol (PPG), and polyoxytetramethylene glycol (PTMG). Examples of the polyester polyol include polyethylene adipate (PEA), polybutylene adipate (PBA), and polyhexamethylene adipate (PHMA). Examples of the polycaprolactone polyol include poly-ε-caprolactone (PCL). Examples of the polycarbonate polyol include polyhexamethylene carbonate. The high molecular weight polyol may be used solely, or two or more of them may be used in combination.

The first polyol component constituting the urethane polyol preferably includes at least one member selected from the group consisting of the polyether diol, the polyester diol, the polycaprolactone diol, and the polycarbonate diol.

The polyether diol preferably includes, for example, at least one member selected from the group consisting of the polyoxyethylene glycol, the polyoxypropylene glycol, and the polyoxytetramethylene glycol. Among them, the polyoxytetramethylene glycol is preferable.

The number average molecular weight of the polyether diol is preferably 500 or more, more preferably 650 or more, and even more preferably 800 or more, and is preferably 3,000 or less, more preferably 2,000 or less, and even more preferably 1,500 or less. If the number average molecular weight of the polyether diol is 500 or more, the distance between the crosslinking points in the paint film is long, the paint film is soft, and thus the spin performance is enhanced. If the number average molecular weight of the polyether diol is 3,000 or less, the distance between the crosslinking points in the paint film is not excessively long, and thus the paint film has better stain resistance. It is noted that the number average molecular weight of the first polyol component can be measured, for example, by gel permeation chromatography (GPC), using polystyrene as a standard material, tetrahydrofuran as an eluate, and an organic solvent system GPC column (e.g. "Shodex (registered trademark) KF series" available from Showa Denko K.K.) as a column.

The first polyol component may include a low molecular weight polyol having a molecular weight of less than 500. Examples of the low molecular weight polyol include a diol such as ethylene glycol, diethylene glycol, triethylene glycol, 1,3-butanediol, 1,4-butanediol, neopentyl glycol, and 1,6-hexanediol; and a triol such as glycerin, trimethylolpropane, and hexanetriol. The low molecular weight polyol may be used solely or as a mixture of at least two of them.

The urethane polyol preferably includes the triol component and the diol component as the first polyol component. As the triol component, trimethylolpropane is preferable. The mixing ratio of the triol component to the diol component (triol component/diol component) is preferably 1.0 or more, more preferably 1.2 or more, and is preferably 2.6 or less, more preferably 2.4 or less, in a molar ratio of OH group.

The first polyisocyanate component constituting the urethane polyol is not particularly limited, as long as the first polyisocyanate component has at least two isocyanate groups. Examples of the first polyisocyanate component include an aromatic polyisocyanate such as 2,4-tolylene diisocyanate, 2,6-tolylene diisocyanate, a mixture of 2,4-tolylene diisocyanate and 2,6-tolylene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylenediisocyanate (TMXDI), and para-phenylene diisocyanate (PPDI); and an alicyclic polyisocyanate or aliphatic polyisocyanate such as 4,4'-dicyclohexylmethane diisocyanate ($H_{12}MDI$), hydrogenated xylylenediisocyanate ($H_6XDI$), hexamethylene diisocyanate (HDI), isophorone diisocyanate (IPDI), and norbornene diisocyanate (NBDI). These polyisocyanates may be used solely or as a mixture of at least two of them.

The urethane polyol preferably includes the alicyclic diisocyanate as the polyisocyanate component.

The amount of the polyether diol in the urethane polyol is preferably 70 mass % or more, more preferably 72 mass % or more, and even more preferably 75 mass % or more. The polyether diol forms a soft segment in the paint film. Thus, if the amount of the polyether diol is 70 mass % or more, the obtained golf ball has further enhanced spin performance.

The weight average molecular weight of the urethane polyol is preferably 5,000 or more, more preferably 5,300 or more, and even more preferably 5,500 or more, and is preferably 20,000 or less, more preferably 18,000 or less, and even more preferably 16,000 or less. If the weight average molecular weight of the urethane polyol is 5,000 or more, the distance between the crosslinking points in the paint film is long, the paint film is soft, and thus the spin performance is enhanced. If the weight average molecular weight of the urethane polyol is 20,000 or less, the distance between the crosslinking points in the paint film is not excessively long, and thus the paint film has better stain resistance.

The hydroxyl value of the urethane polyol is preferably 10 mgKOH/g or more, more preferably 15 mgKOH/g or more, and even more preferably 20 mgKOH/g or more, and is preferably 200 mgKOH/g or less, more preferably 190 mgKOH/g or less, and even more preferably 180 mgKOH/g or less. The hydroxyl value can be measured according to JIS K 1557-1, for example, by an acetylation method.

(Polyrotaxane having at least two hydroxyl groups)

In the present invention, a "rotaxane" means a molecule having a structure having at least one cyclic molecule and an axial molecule piercing through the cavity of the cyclic molecule, regardless of whether or not a blocking structure to prevent disassociation of the cyclic molecule from the axial molecule exists on the axial molecule. A "rotaxane" having

the axial molecule piercing through two or more cyclic molecules is sometimes referred to as a "polyrotaxane". The "polyrotaxane" having the axial molecule piercing through two or more cyclic molecules is included in the "rotaxane" having the axial molecule piercing through at least one cyclic molecule.

The polyrotaxane used in the present invention preferably has at least two hydroxyl groups. This is because such polyrotaxane can react with the polyisocyanate to form the polyurethane.

The polyrotaxane having at least two hydroxyl groups preferably has a cyclodextrin, a linear molecule piercing through the cyclic structure of the cyclodextrin, and blocking groups located at both terminals of the linear molecule to prevent disassociation of the cyclodextrin, wherein at least a part of hydroxyl groups of the cyclodextrin is modified with a caprolactone chain via a $-O-C_3H_6-O-$ group. The hydroxyl group included in the cyclodextrin of the polyrotaxane and the isocyanate group included in the polyisocyanate react to form the polyurethane.

The polyrotaxane is viscoelastic, since the cyclodextrin molecule is movable along the linear molecule that penetrates the cyclodextrin in a skewering manner (pulley effect). Even if a tension is applied to the polyrotaxane, the tension can be uniformly dispersed due to the pulley effect. Thus, the polyrotaxane provides an excellent property that a crack or flaw very hardly occurs, unlike a conventional crosslinked polymer.

The cyclodextrin is a general term for an oligosaccharide having a cyclic structure. The cyclodextrin is, for example, a molecule having 6 to 8 D-glucopyranose residues being linked in a cyclic shape via an $\alpha$-1,4-glucoside bond. Examples of the cyclodextrin include $\alpha$-cydodextrin (number of glucose units: 6), $\beta$-cyclodextrin (number of glucose units: 7), and $\gamma$-cyclodextrin (number of glucose units: 8), and $\alpha$-cyclodextrin is preferable. As the cyclodextrin, one type may be used solely, and two or more types may be used in combination.

The linear molecule is not particularly limited, as long as it is a linear molecule capable of piercing through the cyclic structure of the cyclodextrin so that the cyclic structure of the cyclodextrin is movable along and rotatable around the linear molecule. Examples of the linear molecule include polyalkylene, polyester, polyether, and polyacrylic acid. Among them, polyether is preferable, polyethylene glycol is particularly preferable. Polyethylene glycol has less steric hindrance, and thus can easily pierce through the cyclic structure of the cyclodextrin.

The weight average molecular weight of the linear molecule is preferably 5,000 or more, more preferably 6,000 or more, and is preferably 100,000 or less, more preferably 80,000 or less.

The linear molecule preferably has a functional group at both terminals thereof. When the linear molecule has the functional group, the linear molecule can easily react with the blocking group. Examples of the functional group include a hydroxyl group, carboxyl group, amino group, and thiol group.

The blocking group is not particularly limited, as long as it is located at both terminals of the linear molecule to prevent the cyclodextrin from disassociating from the linear molecule. Examples of the method for preventing the disassociation include a method of using a bulky blocking group to physically prevent the disassociation, and a method of using an ionic blocking group to electrostatically prevent the disassociation. Examples of the bulky blocking group include a cyclodextrin and an adamantyl group. The number of the cyclodextrins which the linear molecule pierces through preferably ranges from 0.06 to 0.61, more preferably ranges from 0.11 to 0.48, even more preferably ranges from 0.24 to 0.41, if the maximum number of the cyclodextrins which the linear molecule pierces through is deemed as 1. This is because if the number of the cyclodextrins is less than 0.06, the pulley effect may not be exerted, and if the number of the cyclodextrins exceeds 0.61, the cyclodextrins are very densely located, so that the movability of the cyclodextrin may decrease.

The polyrotaxane is preferably a polyrotaxane having at least a part of hydroxyl groups of the cyclodextrin being modified with a caprolactone chain. Modifying with the caprolactone chain alleviates the steric hindrance between the polyrotaxane and the polyisocyanate, and thus enhances the reaction efficiency with the polyisocyanate.

As the above modification, for example, the hydroxyl groups of the cyclodextrin are treated with propylene oxide to hydroxylpropylate the cyclodextrin, and then $\varepsilon$-caprolactone is added to perform ring-opening polymerization. As a result of this modification, the caprolactone chain $-(CO(CH_2)_5O)nH$ (n is a natural number ranging from 1 to 100) is linked to the exterior side of the cyclic structure of the cyclodextrin via $-O-C_3H_6-O-$ group. The above "n" represents the degree of polymerization, and is preferably a natural number ranging from 1 to 100, more preferably a natural number ranging from 2 to 70, even more preferably a natural number ranging from 3 to 40. At another terminal of the caprolactone chain, a hydroxyl group is formed through the ring-opening polymerization. The terminal hydroxyl group of the caprolactone chain can react with the polyisocyanate.

The ratio of the hydroxyl groups modified with the caprolactone chain to all the hydroxyl groups (100 mole %) included in the cyclodextrin before the modification is preferably 2 mole % or more, more preferably 5 mole % or more, even more preferably 10 mole % or more. If the ratio of the hydroxyl groups modified with the caprolactone chain falls within the above range, the polyrotaxane has greater hydrophobicity and thus has a higher reactivity with the polyisocyanate.

Fig. 1 is an illustration figure showing a molecular structure of one example of the polyrotaxane used in the present invention. A polyrotaxane 200 has a cyclodextrin 212, a linear molecule 214 piercing through the cyclic structure of the cyclodextrin 212, and blocking groups 216 located at both terminals of the linear molecule 214 to prevent disassociation of the cyclodextrin 212, and a caprolactone chain 218 is linked to the exterior side of the cyclic structure of the cyclodextrin 212 via -O-$C_3H_6$-O- group (not shown).

The hydroxyl value of the polyrotaxane is preferably 10 mg KOH/g or more, more preferably 15 mg KOH/g or more, even more preferably 20 mg KOH/g or more, and is preferably 400 mg KOH/g or less, more preferably 300 mg KOH/g or less, even more preferably 220 mg KOH/g or less, particularly preferably 180 mg KOH/g or less. If the hydroxyl value of the polyrotaxane falls within the above range, the polyrotaxane has a higher reactivity with the polyisocyanate, and thus the paint film has better durability.

The total molecular weight of the polyrotaxane is preferably 30,000 or more, more preferably 40,000 or more, even more preferably 50,000 or more, and is preferably 3,000,000 or less, more preferably 2,500,000 or less, even more preferably 2,000,000 or less, in a weight average molecular weight. If the total weight average molecular weight is 30,000 or more, the paint film has sufficient strength, and if the total weight average molecular weight is 3,000,000 or less, the paint film has sufficient flexibility and thus the golf ball has enhanced approach performance. It is noted that the weight average molecular weight of the polyrotaxane may be measured, for example, by gel permeation chromatography (GPC) using polystyrene as a standard substance, tetrahydrofuran as an eluant, and an organic solvent system GPC column (e.g., "Shodex (registered trademark) KF series" available from Showa Denko K.K.) as a column.

Specific examples of the polyrotaxane modified with the polycaprolactone chain include SeRM super polymer SH3400P, SH2400P, and SH1310P available from Advanced Softmaterials Inc.

The polyol composition used in the present invention may further contain a second polyol in addition to the urethane polyol and the polyrotaxane having at least two hydroxyl groups. Examples of the second polyol include a low molecular weight polyol having a molecular weight of less than 500, and a high molecular weight polyol having a number average molecular weight of 500 or more.

Examples of the low molecular weight polyol include a diol such as ethylene glycol, diethylene glycol, triethylene glycol, 1,3-butanediol, 1,4-butanediol, neopentyl glycol and 1,6-hexanediol; and a triol such as glycerin, trimethylolpropane, and hexanetriol. Examples of the high molecular weight polyol include a polyether polyol, a polyester polyol, a polycaprolactone polyol, a polycarbonate polyol, and an acrylic polyol. Examples of the polyether polyol include polyoxyethylene glycol (PEG), polyoxypropylene glycol (PPG), and polyoxytetramethylene glycol (PTMG). Examples of the polyester polyol include polyethylene adipate (PEA), polybutylene adipate (PBA), and polyhexamethylene adipate (PHMA). Examples of the polycaprolactone polyol include poly-ε-caprolactone (PCL). Examples of the polycarbonate polyol include polyhexamethylene carbonate.

The polyol composition used in the present invention preferably contains the polycaprolactone polyol as the second polyol component.

The polyol composition used in the present invention preferably contains a hydroxy group modified vinyl chloride-vinyl acetate copolymer as a second polyol component. The hydroxy group modified vinyl chloride-vinyl acetate copolymer adjusts the adhesion of the paint film while maintaining the scuff resistance of the paint film. The hydroxy group modified vinyl chloride-vinyl acetate copolymer is obtained, for example, by a method of copolymerizing vinyl chloride, vinyl acetate, and a monomer having a hydroxy group (e.g., polyvinyl alcohol, hydroxyalkyl acrylate); and a method of partially or completely saponifying a vinyl chloride-vinyl acetate copolymer.

The amount of the vinyl chloride component in the hydroxy group modified vinyl chloride-vinyl acetate copolymer is preferably 1 mass % or more, more preferably 20 mass % or more, and even more preferably 50 mass % or more, and is preferably 99 mass % or less, more preferably 95 mass % or less. Specific examples of the hydroxy group modified vinyl chloride-vinyl acetate copolymer include Solbin (registered trademark) A, Solbin AL, and Solbin TA3 available from Nissin Chemical Industry Co., Ltd.

The polyol composition used in the present invention preferably contains, as the polyol component, the urethane polyol and the polyrotaxane having at least two hydroxyl groups, more preferably contains the urethane polyol, the polyrotaxane having at least two hydroxyl groups and the hydroxy group modified vinyl chloride-vinyl acetate copolymer, or contains the urethane polyol, the polyrotaxane having at least two hydroxyl groups and the polycaprolactone polyol, and even more preferably contains the urethane polyol, the polyrotaxane having at least two hydroxyl groups, the hydroxy group modified vinyl chloride-vinyl acetate copolymer and the polycaprolactone polyol.

The amount of the urethane polyol in the polyol component contained in the polyol composition is preferably more than 80 mass %, more preferably 84 mass % or more, and even more preferably 88 mass % or more, and is preferably less than 100 mass %, more preferably 96 mass % or less, and even more preferably 92 mass % or less.

The amount of the polyrotaxane having at least two hydroxyl groups in the polyol component contained in the polyol composition is preferably more than 0 mass %, more preferably 1.5 mass % or more, and even more preferably 3 mass % or more, and is preferably less than 10 mass %, more preferably 8.5 mass % or less, and even more preferably 7 mass % or less. If the amount of the polyrotaxane falls within the above range, the stain resistance and the leveling property are better.

The amount of the polycaprolactone polyol in the polyol component contained in the polyol composition is preferably 0 mass % or more, more preferably 1 mass % or more, and even more preferably 2 mass % or more, and is

preferably 5 mass % or less, more preferably 4 mass % or less, and even more preferably 3 mass % or less.

The amount of the hydroxy group modified vinyl chloride-vinyl acetate copolymer in the polyol component contained in the polyol composition is preferably 0 mass % or more, more preferably 1 mass % or more, and is preferably 5 mass % or less, more preferably 4 mass % or less.

It is noted that the amount of each of these components is appropriately selected in the above-described range such that the total amount of the components included as the polyol becomes 100%.

(Polyisocyanate composition)

Examples of the polyisocyanate component of the polyisocyanate composition used in the present invention include a compound having at least two isocyanate groups. Examples of the polyisocyanate include an aromatic polyisocyanate such as 2,4-tolylene diisocyanate, 2,6-tolylene diisocyanate, a mixture of 2,4-tolylene diisocyanate and 2,6-tolylene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylene diisocyanate (TMXDI), and para-phenylene diisocyanate (PPDI); an alicyclic polyisocyanate or aliphatic polyisocyanate such as 4,4'-dicyclohexylmethane diisocyanate ($H_{12}$MDI), hydrogenated xylylene diisocyanate ($H_6$XDI), hexamethylene diisocyanate (HDI), isophorone diisocyanate (IPDI), and norbornene diisocyanate (NBDI); and derivatives of these polyisocyanates. In the present invention, two or more of the polyisocyanates may be used in combination.

Examples of the derivative of the polyisocyanate include an adduct-modified product obtained by a reaction between a diisocyanate and a polyhydric alcohol; an isocyanurate-modified product of a diisocyanate; a biuret-modified product; and an allophanate product, and the one from which free diisocyanate has been removed is more preferable. The polyisocyanate composition preferably contains, as a polyisocyanate component, at least one member selected from the group consisting of an isocyanurate-modified product of hexamethylene diisocyanate, an adduct-modified product of hexamethylene diisocyanate, a biuret-modified of hexamethylene diisocyanate, and an isocyanurate-modified product of isophorone diisocyanate.

The biuret-modified product is, for example, a biuret-modified product in which a diisocyanate is trimerized (the following formula (1)). In the formula (1), R represents a residue where isocyanate groups are removed from the diisocyanate. The biuret-modified product is preferably a trimer of hexamethylene diisocyanate.

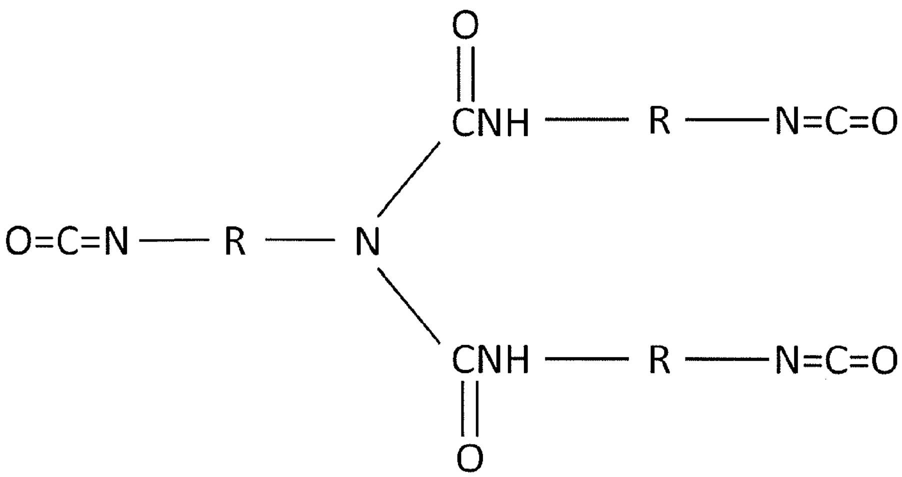

(1)

Examples of the isocyanurate-modified product include a trimer of diisocyanate represented by the following formula (2). In the formula (2), R represents a residue where isocyanate groups are removed from the diisocyanate. Examples of the isocyanurate-modified product include an isocyanurate-modified product of hexamethylene diisocyanate and an isocyanurate-modified product of isophorone diisocyanate, and a trimer of hexamethylene diisocyanate or a trimer of isophorone diisocyanate is preferable.

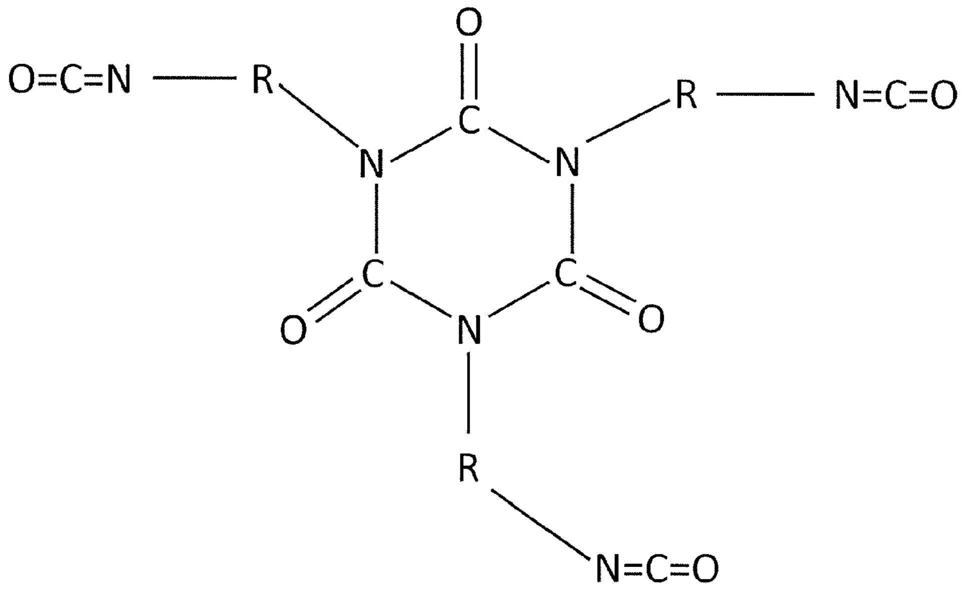

(2)

The adduct-modified product is a polyisocyanate obtained by a reaction between a diisocyanate and a polyhydric alcohol. The polyhydric alcohol is preferably a low molecular weight triol such as trimethylolpropane or glycerin. The adduct-modified product is preferably, for example, a triisocyanate (the following formula (3)) obtained by a reaction between a diisocyanate and trimethylolpropane, and a triisocyanate (the following formula (4)) obtained by a reaction between a diisocyanate and glycerin. In the formulae (3) and (4), R represents a residue where isocyanate groups are removed from the diisocyanate.

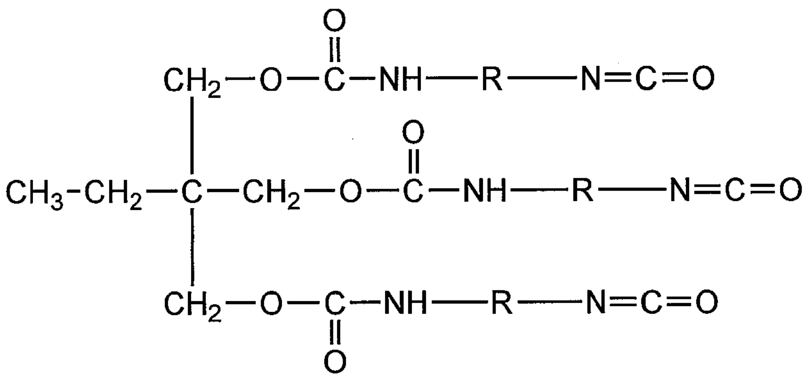

(3)

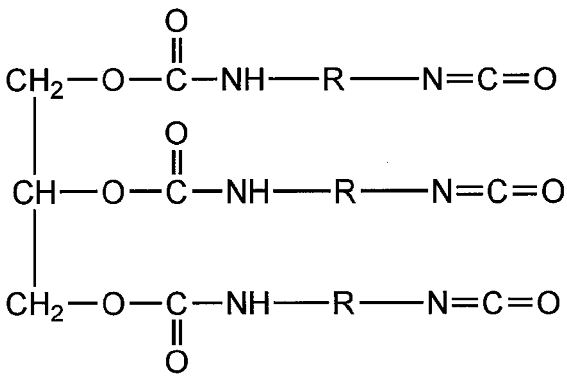

(4)

The adduct-modified product is preferably, for example, an adduct-modified product of hexamethylene diisocyanate, more preferably a triisocyanate obtained by a reaction between hexamethylene diisocyanate and trimethylolpropane, and a triisocyanate obtained by a reaction between hexamethylene diisocyanate and glycerin.

The allophanate product is, for example, a triisocyanate obtained by further reacting a diisocyanate with a urethane bond formed by a reaction between a diisocyanate and a low molecular weight diol.

(Adduct-modified product)

In a preferable embodiment of the present invention, the polyisocyanate component preferably includes the adduct-modified product, more preferably the adduct-modified product of hexamethylene diisocyanate (preferably a trimer). In the case that the adduct-modified product of hexamethylene diisocyanate is used, the amount of the adduct-modified product of hexamethylene diisocyanate in the polyisocyanate component is preferably 10 mass % or more, more preferably 20 mass % or more, and even more preferably 30 mass % or more. It is also preferable that the polyisocyanate component consists of the adduct-modified product of hexamethylene diisocyanate.

(Isocyanurate-modified product)

In another preferable embodiment of the present invention, the polyisocyanate component preferably includes the isocyanurate-modified product, more preferably the isocyanurate-modified product of hexamethylene diisocyanate (preferably a trimer) or the isocyanurate-modified product of isophorone diisocyanate (preferably a trimer), and even more preferably a combination of the isocyanurate-modified product of hexamethylene diisocyanate (preferably a trimer) and the isocyanurate-modified product of isophorone diisocyanate (preferably a trimer). In the case that the isocyanurate-modified product of hexamethylene diisocyanate and the isocyanurate-modified product of isophorone diisocyanate are used in combination, the mass ratio (isocyanurate-modified product of hexamethylene diisocyanate/isocyanurate-modified product of isophorone diisocyanate) of the isocyanurate-modified product of hexamethylene diisocyanate to the isocyanurate-modified product of isophorone diisocyanate is preferably 0.1 or more, more preferably 0.2 or more, and even more preferably 0.3 or more, and is preferably 9 or less, more preferably 4 or less, and even more preferably 3 or less. If the mass ratio falls within the above range, the spin rate on approach shots under a condition that there is grass between the golf ball and the club face further increases.

(Adduct-modified product and isocyanurate-modified product)

In another preferable embodiment of the present invention, the polyisocyanate component preferably includes a combination of the adduct-modified product and the isocyanurate-modified product, more preferably a combination of the adduct-modified product of hexamethylene diisocyanate (preferably a trimer) and the isocyanurate-modified product of hexamethylene diisocyanate (preferably a trimer), or a combination of the adduct-modified product of hexamethylene diisocyanate (preferably a trimer) and the isocyanurate-modified product of isophorone diisocyanate (preferably a trimer). In this case, the mass ratio (adduct-modified product/isocyanurate-modified product) of the adduct-modified product to the isocyanurate-modified product is preferably 0.1 or more, more preferably 0.2 or more, and even more preferably 0.3 or more. If the mass ratio is 0.1 or more, the spin rate on approach shots under a condition that there is grass between the golf ball and the club face further increases.

(HDI adduct-modified product and HDI isocyanurate-modified product)

In another preferable embodiment of the present invention, when the adduct-modified product of hexamethylene diisocyanate and the isocyanurate-modified product of hexamethylene diisocyanate are used as the polyisocyanate component, the total amount of the adduct-modified product of hexamethylene diisocyanate and the isocyanurate-modified product of hexamethylene diisocyanate in the polyisocyanate component is preferably 70 mass % or more, more preferably 80 mass % or more, and even more preferably 90 mass % or more. It is also preferable that the polyisocyanate component consists of the adduct-modified product of hexamethylene diisocyanate and the isocyanurate-modified product of hexamethylene diisocyanate.

(HDI isocyanurate-modified product and IPDI isocyanurate-modified product)

In another preferable embodiment of the present invention, when the isocyanurate-modified product of hexamethylene diisocyanate and the isocyanurate-modified product of isophorone diisocyanate are used as the polyisocyanate component, the total amount of the isocyanurate-modified product of hexamethylene diisocyanate and the isocyanurate-modified product of isophorone diisocyanate in the polyisocyanate component is preferably 70 mass % or more, more preferably 80 mass % or more, and even more preferably 90 mass % or more. It is also preferable that the polyisocyanate component consists of the isocyanurate-modified product of hexamethylene diisocyanate and the isocyanurate-modified product of isophorone diisocyanate.

(HDI adduct-modified product and IPDI isocyanurate-modified product)

In another preferable embodiment of the present invention, when the adduct-modified product of hexamethylene diisocyanate and the isocyanurate-modified product of isophorone diisocyanate are used as the polyisocyanate component, the total amount of the adduct-modified product of hexamethylene diisocyanate and the isocyanurate-modified product of isophorone diisocyanate in the polyisocyanate component is preferably 70 mass % or more, more preferably 80 mass % or more, and even more preferably 90 mass % or more. It is also preferable that the polyisocyanate component consists of the adduct-modified product of hexamethylene diisocyanate and the isocyanurate-modified product of isophorone diisocyanate.

The amount of the isocyanate group (NCO %) included in the polyisocyanate component is preferably 0.5 mass % or more, more preferably 1.0 mass % or more, and even more preferably 2.0 mass % or more, and is preferably 45 mass % or less, more preferably 40 mass % or less, and even more preferably 35 mass % or less. It is noted that the amount of the isocyanate group (NCO %) included in the polyisocyanate component can be represented by the following expression.

NCO (%) = 100 X [mole number of the isocyanate group included in the polyisocyanate x 42 (molecular weight of NCO)] / [total mass (g) of the polyisocyanate]

Specific examples of the polyisocyanate component include Burnock (registered trademark) D-800, Burnock DN-950, and Burnock DN-955 available from DIC corporation; Desmodur (registered trademark) N75MPA/X, Desmodur N3300, Desmodur N3390, Desmodur L75 (C), and Sumidur (registered trademark) E21-1 available from Sumika Bayer Urethane Co., Ltd.; Coronate (registered trademark) HX, Coronate HK, Coronate HL, and Coronate EH available from Tosoh Corporation; Duranate (registered trademark) 24A-100, Duranate 21S-75E, Duranate TPA-100, Durante TKA-100, and Durante 24A-90CX available from Asahi Kasei Chemicals Corporation; and VESTANAT (registered trademark) T1890 available from Degussa.

In the curing reaction of the curing type paint composition, the molar ratio (NCO group/OH group) of the isocyanate group (NCO group) included in the polyisocyanate composition to the hydroxyl group (OH group) included in the polyol composition is preferably 0.1 or more, more preferably 0.2 or more. If the molar ratio (NCO group/OH group) is less than 0.1, the curing reaction is not sufficient, and if the molar ratio (NCO group/OH group) is excessively great, the amount of the isocyanate group becomes excessive, and thus the obtained paint film may become hard and fragile, and the appearance thereof may deteriorate. For this reason, the molar ratio (NCO group/OH group) is preferably 1.5 or less, more preferably 1.4 or less, and even more preferably 1.3 or less. It is noted that the reason why the appearance of the obtained paint film deteriorates if the amount of the isocyanate group is excessive in the paint is considered that an excessive amount of the isocyanate group may promote a reaction between the moisture in the air and the isocyanate group, thereby generating a lot of carbon dioxide gas.

The paint may be either a waterborne paint mainly containing water as a dispersion medium or a solvent-based paint containing an organic solvent as a dispersion medium, and the solvent-based paint is preferable. In case of the solvent-based paint, preferable examples of the solvent include toluene, isopropyl alcohol, xylene, methyl ethyl ketone, methyl ethyl isobutyl ketone, ethylene glycol monomethyl ether, ethylbenzene, propylene glycol monomethyl ether, isobutyl alcohol, and ethyl acetate. It is noted that the solvent may be blended in either the polyol composition or the polyisocyanate composition. From the viewpoint of uniformly performing the curing reaction, the solvent is preferably blended in each of the polyol composition and the polyisocyanate composition.

The paint preferably further includes a modified silicone. If the modified silicone is included as a leveling agent, unevenness of the coated surface can be reduced, and thus a smooth coated surface can be formed on the surface of the golf ball. Examples of the modified silicone include a modified silicone having an organic group being introduced to a side chain or a terminal of a polysiloxane skeleton, a polysiloxane block copolymer obtained by copolymerizing a polyether block and/or a polycaprolactone block, etc. with a polysiloxane block, and a modified silicone having an organic group being introduced to a side chain or a terminal of the polysiloxane block copolymer. The polysiloxane skeleton or the polysiloxane block is preferably linear, and examples thereof include dimethyl polysiloxane, methylphenyl polysiloxane, and methyl hydrogen polysiloxane. Examples of the organic group include an amino group, epoxy group, mercapto group, and carbinol group. In the present invention, as the modified silicone oil, a polydimethylsiloxane-polycaprolactone block copolymer is preferably used, and a terminal carbinol-modified polydimethylsiloxane-polycaprolactone block copolymer is more preferably used. This is because these block copolymers have excellent compatibility with the caprolactone-modified polyrotaxane and the polycaprolactone polyol. Specific examples of the modified silicone used in the

present invention include DBL-C31, DBE-224, and DCE-7521 available from Gelest, Inc.

The modified silicone remains in the paint film formed from the paint composition. The amount of the modified silicone in the paint film and curing type paint composition is preferably 0.01 part by mass or more, more preferably 0.05 part by mass or more, and is preferably 10 parts by mass or less, more preferably 5 parts by mass or less, with respect to 100 parts by mass of the base resin component constituting the layer of the paint film.

A conventionally known catalyst can be employed in the curing reaction. Examples of the catalyst include a monoamine such as triethyl amine and N,N-dimethylcyclohexylamine; a polyamine such as N,N,N',N'-tetramethylethylene diamine and N,N,N',N", N"-pentamethyldiethylene triamine; a cyclic diamine such as 1,8-diazabicyclo[5.4.0]-7-undecene (DBU) and triethylene diamine; a tin catalyst such as dibutyl tin dilaurate and dibutyl tin diacetate. These catalysts may be used solely, or two or more of the catalysts may be used in combination. Among them, the tin catalyst such as dibutyl tin dilaurate and dibutyl tin diacetate is preferable, dibutyl tin dilaurate is particularly preferable.

In a preferable embodiment of the present invention, at least one layer of the paint film includes the base resin and a porous filler. It is noted that in the present invention, the layer of the paint film containing the polyurethane as the base resin and the porous filler is sometimes referred to as a "porous filler-containing polyurethane layer".

(Porous filler)

The porous filler has many fine pores. The shape of the fine pore included in the porous filler is not particularly limited. The pore size of the fine pore included in the porous filler is not particularly limited, but the pore size of the fine pore preferably ranges from 0.1 nm to 500 nm. The pore size of the fine pore included in the porous filler varies depending on the type of the porous filler. For example, zeolite has a pore size in a range from 0.1 nm to 2 nm, and diatomaceous earth has a pore size of about 300 nm.

The porous filler contains 50 mass % or more of $SiO_2$ as a constituent component. If the amount of $SiO_2$ in the porous filler is 50 mass % or more, the paint film has improved water repellency, and thus the spin performance on the shot in a state wetted with water is enhanced. The amount of $SiO_2$ in the constituent component of the porous filler is preferably 55 mass % or more, more preferably 60 mass % or more, and is 100 mass % or less, preferably 95 mass % or less, more preferably 90 mass % or less. It is noted that the amount of $SiO_2$ was determined by quantifying the amount of Si element by fluorescence X-ray analysis and converting the amount of Si element into the amount of $SiO_2$ component.

Examples of the porous filler include diatomaceous earth, zeolite and pearlite. Diatom is a kind of plankton, and dead bodies of diatom deposited on seabed or lake bed, and fossilized into diatomaceous earth. Diatomaceous earth primarily includes silica and has many very fine pores in each particle thereof. Pearlite is a porous material formed when water included in a glassy volcanic stone such as obsidian, pearlstone and pitchstone is evaporated by treating the glassy volcanic stone at a high temperature. Zeolite is a crystalline porous alumino-silicate. Examples of the structure of zeolite include type A, ferrierite, ZSM-5, mordenite, beta, type X and type Y. It is noted that zeolite also includes porous silicalite. The porous filler may be used solely, or two or more of them may be used in combination.

The volume average particle size of the porous filler is preferably 0.5 μm or more, more preferably 1.0 μm or more, and even more preferably 2.0 μm or more, and is preferably 30 μm or less, more preferably 20 μm or less, and even more preferably 15 μm or less. If the volume average particle size of the porous filler is 0.5 μm or more, the water-discharging effect is better and the spin performance under a wet condition is further enhanced, and if the volume average particle size of the porous filler is 30 μm or less, the appearance is better and the stain attachment is decreased.

The bulk density of the porous filler is not particularly limited, but it is preferably 0.2 $g/cm^3$ or more, more preferably 0.3 $g/cm^3$ or more, and is preferably 1.0 $g/cm^3$ or less, more preferably 0.9 $g/cm^3$ or less, and even more preferably 0.8 $g/cm^3$ or less.

The amount of the porous filler in the layer of the paint film is preferably 0.5 part by mass or more, more preferably 1 part by mass or more, and even more preferably 2 parts by mass or more, and is preferably 10 parts by mass or less, more preferably 8 parts by mass or less, and even more preferably 6 parts by mass or less, with respect to 100 parts by mass of the base resin of the layer of the paint film. If the amount of the porous filler is 0.5 part by mass or more, the water-discharging effect is better and the spin performance under a wet condition is further enhanced, and if the amount of the porous filler is 10 parts by mass or less, the appearance is better and the stain attachment is decreased.

The paint film may further include additives that may be generally included in a paint for a golf ball, such as an ultraviolet absorber, an antioxidant, a light stabilizer, a fluorescent brightener, an anti-blocking agent, a leveling agent, a slip agent, and a viscosity modifier, where necessary.

In the case that the paint film is multiple layered, examples of the base resin constituting the layer of the paint film other than the layer including the above-described polyurethane include a polyurethane, an epoxy resin, an acrylic resin, a vinyl acetate resin, and a polyester resin. Among them, polyurethane is preferable.

(Golf ball)

The golf ball according to the present invention is not particularly limited, as long as it comprises a golf ball body and a paint film composed of at least one layer and formed on a surface of the golf ball body. The construction of the golf ball body is not particularly limited, and may be a one-piece golf ball, a two-piece golf ball, a multi-piece golf ball composed of three or more pieces, or a wound golf ball. The present invention can be applied appropriately to any one of the above golf ball bodies.

(Core)

A one-piece golf ball body, and a core used in a wound golf ball, two-piece golf ball and multi-piece golf ball will be explained.

The one-piece golf ball body and core is formed from a conventional rubber composition (hereinafter sometimes simply referred to as "core rubber composition"). For example, the one-piece golf ball body and core can be molded by heat pressing a rubber composition containing a base rubber, a co-crosslinking agent and a crosslinking initiator.

As the base rubber, particularly preferred is a high-cis polybutadiene having a cis bond in an amount of 40 mass % or more, preferably 70 mass % or more, and more preferably 90 mass % or more in view of its superior resilience. As the co-crosslinking agent, an $\alpha,\beta$-unsaturated carboxylic acid having 3 to 8 carbon atoms or a metal salt thereof is preferable, and a metal salt of acrylic acid or a metal salt of methacrylic acid is more preferable. As the metal constituting the metal salt, zinc, magnesium, calcium, aluminum or sodium is preferable, and zinc is more preferable. The amount of the co-crosslinking agent is preferably 20 parts by mass or more and 50 parts by mass or less with respect to 100 parts by mass of the base rubber. In a case that the $\alpha,\beta$-unsaturated carboxylic acid having 3 to 8 carbon atoms is used as the co-crosslinking agent, a metal compound (e.g. magnesium oxide) is preferably added. As the crosslinking initiator, an organic peroxide is preferably used. Specific examples of the organic peroxide include dicumyl peroxide, 1,1-bis(t-butylperoxy)-3,3,5-trimethylcyclohexane, 2,5-dimethyl-2,5-di(t-butylperoxy) hexane, and di-t-butyl peroxide. Among them, dicumyl peroxide is preferably used. The amount of the crosslinking initiator is preferably 0.2 part by mass or more, more preferably 0.3 part by mass or more, and is preferably 3 parts by mass or less, more preferably 2 parts by mass or less, with respect to 100 parts by mass of the base rubber.

In addition, the core rubber composition may further contain an organic sulfur compound. As the organic sulfur compound, diphenyl disulfides (e.g. diphenyl disulfide, bis(pentabromophenyl) disulfide), thiophenols or thionaphthols (e.g. 2-thionaphthol) are preferably used. The amount of the organic sulfur compound is preferably 0.1 part by mass or more, more preferably 0.3 part by mass or more, and is preferably 5.0 parts by mass or less, more preferably 3.0 parts by mass or less, with respect to 100 parts by mass of the base rubber. The core rubber composition may further contain a carboxylic acid and/or a salt thereof. As the carboxylic acid and/or the salt thereof, a carboxylic acid having 1 to 30 carbon atoms and/or a salt thereof is preferable. As the carboxylic acid, any one of an aliphatic carboxylic acid and an aromatic carboxylic acid (such as benzoic acid) may be used. The amount of the carboxylic acid and/or the salt thereof is preferably 1 part by mass or more and 40 parts by mass or less with respect to 100 parts by mass of the base rubber.

The core rubber composition may further contain a weight adjusting agent such as zinc oxide and barium sulfate, an antioxidant, a colored powder, or the like in addition to the base rubber, the co-crosslinking agent, the crosslinking initiator, and the organic sulfur compound. The molding conditions for heat pressing the core rubber composition may be determined appropriately depending on the rubber composition. Generally, the heat pressing is preferably carried out at a temperature in a range from 130 °C to 200 °C for 10 to 60 minutes, or carried out in a two-step heating of heating at a temperature in a range from 130 °C to 150 °C for 20 to 40 minutes followed by heating at a temperature in a range from 160 °C to 180 °C for 5 to 15 minutes.

(Cover)

The golf ball body preferably comprises a core and a cover covering the core. In this case, the hardness of the cover is preferably 60 or less, more preferably 55 or less, even more preferably 50 or less, and most preferably 45 or less in Shore D hardness. If the hardness of the cover is 60 or less in Shore D hardness, the spin rate further increases. The lower limit of the hardness of the cover is not particularly limited, and is preferably 10, more preferably 15, and even more preferably 20 in Shore D hardness. The hardness of the cover is a slab hardness of the cover composition molded into a sheet shape.

The thickness of the cover is preferably 0.1 mm or more, more preferably 0.2 mm or more, and even more preferably 0.3 mm or more, and is preferably 1.0 mm or less, more preferably 0.9 mm or less, and even more preferably 0.8 mm or less. If the thickness of the cover is 0.1 mm or more, the shot feeling of the golf ball is better, and if the thickness of the cover is 1.0 mm or less, the resilience of the golf ball is maintained.

The resin component constituting the cover is not particularly limited, and examples thereof include various

resins such as an ionomer resin, a polyester resin, a urethane resin and a polyamide resin; a thermoplastic polyamide elastomer having a trade name of "Pebax (registered trademark) (e.g. "Pebax 2533")" available from Arkema Inc.; a thermoplastic polyester elastomer having a trade name of "Hytrel (registered trademark) (e.g. "Hytrel 3548" and "Hytrel 4047")" available from Du Pont-Toray Co., Ltd.; a thermoplastic polyurethane elastomer having a trade name of "Elastollan (registered trademark) (e.g. "Elastollan XNY97A")" available from BASF Japan Ltd.; and a thermoplastic styrene elastomer having a trade name of "TEFABLOC" or thermoplastic polyester elastomer available from Mitsubishi Chemical Corporation. These cover materials may be used solely, or two or more of these cover materials may be used in combination.

Among them, the resin component constituting the cover is preferably the polyurethane or the ionomer resin, particularly preferably the polyurethane. When the resin component constituting the cover includes the polyurethane, the amount of the polyurethane in the resin component is preferably 50 mass % or more, more preferably 70 mass % or more, and even more preferably 90 mass % or more. When the resin component constituting the cover includes the ionomer resin, the amount of the ionomer resin in the resin component is preferably 50 mass % or more, more preferably 70 mass % or more, and even more preferably 90 mass % or more.

The polyurethane may be either a thermoplastic polyurethane or a thermosetting polyurethane. The thermoplastic polyurethane is a polyurethane exhibiting plasticity by heating and generally means a polyurethane having a linear chain structure of a high molecular weight to a certain extent. On the other hand, thermosetting polyurethane (two-component curing type polyurethane) is a polyurethane obtained by polymerization through a reaction between a low molecular weight urethane prepolymer and a curing agent (chain extender) when molding the cover. The thermosetting polyurethane includes a polyurethane having a linear chain structure, or a polyurethane having a three-dimensional crosslinked structure depending on the number of the functional group of the prepolymer or curing agent (chain extender) to be used. The polyurethane is preferably thermoplastic elastomer.

The cover may contain a pigment component such as a white pigment (e.g. titanium oxide), a blue pigment and a red pigment, a weight adjusting agent such as calcium carbonate and barium sulfate, a dispersant, an antioxidant, an ultraviolet absorber, a light stabilizer, a fluorescent material or fluorescent brightener, or the like, in addition to the above resin component, as long as they do not impair the performance of the cover.

The embodiment for molding the cover from the cover composition is not particularly limited, and examples thereof include an embodiment comprising injection molding the cover composition directly onto the core; and an embodiment comprising molding the cover composition into hollow shells, covering the core with a plurality of the hollow shells and compression molding the core with a plurality of the hollow shells (preferably an embodiment comprising molding the cover composition into half hollow-shells, covering the core with two of the half hollow-shells and compression molding the core with two of the half hollow-shells). After the cover is molded, the obtained golf ball body is ejected from the mold, and as necessary, the golf ball body is preferably subjected to surface treatments such as deburring, cleaning, and sandblast. If desired, a mark may be formed.

The total number of dimples formed on the cover is preferably 200 or more and 500 or less. If the total number is less than 200, the dimple effect is hardly obtained. On the other hand, if the total number exceeds 500, the dimple effect is hardly obtained because the size of the respective dimples is small. The shape (shape in a plan view) of dimples includes, for example, without limitation, a circle, a polygonal shape such as a roughly triangular shape, a roughly quadrangular shape, a roughly pentagonal shape, a roughly hexagonal shape, and other irregular shape. The shape of dimples is employed solely or at least two of them may be used in combination.

In the case that the golf ball is a three-piece golf ball, a four-piece golf ball, or a multi-piece golf ball comprising five or more pieces, examples of the material used for the intermediate layer disposed between the core and the outmost cover include a thermoplastic resin such as a polyurethane, an ionomer resin, a polyamide, and polyethylene; a thermoplastic elastomer such as a styrene elastomer, a polyolefin elastomer, a polyurethane elastomer, and a polyester elastomer; and a cured product of a rubber composition. Herein, examples of the ionomer resin include a product obtained by neutralizing, with a metal ion, at least a part of carboxyl groups in a copolymer composed of ethylene and an $\alpha,\beta$-unsaturated carboxylic acid; and a product obtained by neutralizing, with a metal ion, at least a part of carboxyl groups in a terpolymer composed of ethylene, an $\alpha,\beta$-unsaturated carboxylic acid and an $\alpha,\beta$-unsaturated carboxylic acid ester. The intermediate layer may further contain a weight adjusting agent such as barium sulfate and tungsten, an antioxidant, and a pigment. It is noted that the intermediate layer may be referred to as an inner cover layer or an outer core depending on the construction of the golf ball.

(Formation of paint film)

The paint film of the golf ball according to the present invention is formed by applying the paint on the surface of the golf ball body. The method of applying the paint is not particularly limited, a conventional method can be adopted, and examples thereof include a spray coating and electrostatic coating.

In the case of the spray coating with an air gun, the polyisocyanate composition and the polyol composition

are fed with respective pumps and continuously mixed with a line mixer located in the stream line just before the air gun, and the obtained mixture is air-sprayed. Alternatively, the polyisocyanate composition and the polyol composition are air-sprayed respectively with an air spray system provided with a device for controlling the mixing ratio thereof. The paint application may be conducted by spraying the paint one time or overspraying the paint multiple times.

The paint applied on the golf ball body can be dried, for example, at a temperature in a range of from 30 °C to 70 °C for 1 hour to 24 hours, to form the paint film.

The golf ball according to the present invention has a paint film composed of at least one layer and formed on the surface of the golf ball body, wherein at least one layer of the paint film includes the polyurethane used in the present invention as the base resin. In a more preferable embodiment of the present invention, the outermost layer of the paint film located at the outermost side includes the polyurethane used in the present invention as the base resin.

Specifically, in the case that the paint film is single layered, the single layered paint film includes the polyurethane used in the present invention as the base resin, and in the case that the paint film has a dual layered construction composed of an inner layer and an outer layer, examples of the embodiment of the paint film include an embodiment that the inner layer includes the polyurethane used in the present invention as the base resin, an embodiment that the outer layer includes the polyurethane used in the present invention as the base resin, and an embodiment that both the inner layer and the outer layer include the polyurethane used in the present invention as the base resin.

The peak temperature of the loss tangent (tanδ) of the polyurethane used in the present invention is preferably -40 °C or more, more preferably -30 °C or more, and even more preferably -20 °C or more, and is preferably 40 °C or less, more preferably 30 °C or less, and even more preferably 20 °C or less. If the peak temperature of the loss tangent (tanδ) is -40 °C or more, the paint film has low tackiness and thus is hard to be stained, and if the peak temperature of the loss tangent (tanδ) is 40 °C or less, the paint film has a larger dynamic friction coefficient and thus the spin rate on approach shots under a condition that there is grass between the golf ball and the club face increases.

The loss modulus (E") of the polyurethane used in the present invention at a temperature of 24 °C is preferably 0.1 MPa or more, more preferably 0.5 MPa or more, and even more preferably 1.0 MPa or more, and is preferably 80 MPa or less, more preferably 65 MPa or less, and even more preferably 50 MPa or less. If the loss modulus (E") is 0.1 MPa or more, the paint film has low tackiness and thus is hard to be stained, and if the loss modulus (E") is 80 MPa or less, the paint film has a larger dynamic friction coefficient and thus the spin rate on approach shots under a condition that there is grass between the golf ball and the club face increases.

The 10% elastic modulus of the polyurethane used in the present invention is preferably 1 $kgf/cm^2$ (0.10 MPa) or more, more preferably 3 $kgf/cm^2$ (0.29 MPa) or more, and even more preferably more than 10 $kgf/cm^2$ (0.98 MPa), and is preferably 50 $kgf/cm^2$ (4.9 MPa) or less, more preferably 40 $kgf/cm^2$ (3.9 MPa) or less, and even more preferably 30 $kgf/cm^2$ (2.9 MPa) or less. If the 10% elastic modulus is 1 $kgf/cm^2$ or more, the paint film has low tackiness and thus is hard to be stained, and if the 10% elastic modulus is 50 $kgf/cm^2$ or less, the paint film has a larger dynamic friction coefficient and thus the spin rate on approach shots under a condition that there is grass between the golf ball and the club face increases.

The 10% elastic modulus, loss modulus and peak temperature of loss tangent of the polyurethane layer is controlled by adjusting the resin component of the paint film, the amount thereof or the like.

In another preferable embodiment of the present invention, the golf ball according to the present invention has a paint film composed of at least one layer and formed on a surface of the golf ball body, wherein one layer of the paint film includes the polyurethane used in the present invention as the base resin, and the porous filler. In a more preferable embodiment of the present invention, the outermost layer of the paint film located at the outermost side includes the polyurethane used in the present invention as the base resin, and the porous filler.

Specifically, in the case that the paint film is single layered, the single layered paint film is the porous filler-containing polyurethane layer, and in the case that the paint film has a dual layered construction composed of an inner layer and an outer layer, examples of the embodiment of the dual layered paint film include an embodiment that the inner layer is the porous filler-containing polyurethane layer, an embodiment that the outer layer is the porous filler-containing polyurethane layer, and an embodiment that both the inner layer and the outer layer are the porous filler-containing polyurethane layer.

The ratio (d/T) of the volume average particle size (d: μm) of the porous filler to the thickness (T: μm) of the porous filler-containing polyurethane layer is preferably 0.01 or more, more preferably 0.05 or more, and even more preferably 0.1 or more, and is preferably 2.0 or less, more preferably 1.5 or less, and even more preferably 1.0 or less. If the ratio (d/T) is 0.01 or more, the water-discharging effect is greater and thus the spin performance under a wet condition is further enhanced, and if the ratio (d/T) is 2.0 or less, the appearance is better and the stain attachment is decreased.

The whole particle of the porous filler may exist inside the paint film, or alternatively a part of the particle of the porous filler may be exposed on the surface of the paint film. It is noted that it is preferable that the whole particle of the porous filler exists inside the paint film, i.e. the porous filler is not exposed on the surface of the paint film.

The water sliding angle of the surface of the paint film including the porous filler is preferably less than 50°,

more preferably 45° or less, and even more preferably 40° or less. If the water sliding angle is less than 50°, the water-discharging effect during the flight on a rainy day is greater. The lower limit of the water sliding angle is not particularly limited, but it is generally 10°. The sliding angle is a tilt angle at which a liquid begins to slide downward when a solid sample having a level solid surface on which a static liquid exists, is slowly tilted.

The adhesion energy of the surface of the paint film including the porous filler is preferably less than 10 $mJ/m^2$, more preferably 9 $mJ/m^2$ or less, and even more preferably 8 $mJ/m^2$ or less. If the adhesion energy is less than 10 $mJ/m^2$, the water-discharging effect during the flight on a rainy day is greater. The lower limit of the adhesion energy is not particularly limited, but it is generally 4 $mJ/m^2$.

The dynamic friction coefficient of the paint film including the porous filler is preferably 0.65 or more, more preferably 0.68 or more, even more preferably 0.70 or more, and most preferably 0.72 or more, and is preferably 1.3 or less, more preferably 1.2 or less, and even more preferably 1.1 or less. If the dynamic friction coefficient is less than 0.65, the spin rate on approach shots under a condition that there is grass between the golf ball and the club face decreases, and if the dynamic friction coefficient is more than 1.3, the paint film is too tacky and thus stain is easily attached thereon.

The dynamic friction coefficient, water sliding angle, adhesion energy, 10% elastic modulus and peak temperature of loss tangent of the porous filler-containing polyurethane layer is controlled by adjusting the type or amount of the resin component, porous filler or the like of the paint film.

The thickness of the outermost layer of the paint film of the golf ball according to the present invention is preferably 5 μm or more, more preferably 7 μm or more, and is preferably 40 μm or less, more preferably 30 μm or less, and even more preferably 20 μm or less. If the thickness of the outermost layer of the paint film falls within the above range, the paint film has better appearance, and the golf ball has better abrasion resistance and approach performance.

In the case that the paint film of the golf ball according to the present invention is multiple layered, the total thickness of the paint film is preferably 5 μm or more, more preferably 7 μm or more, and even more preferably 9 μm or more, and is preferably 50 μm or less, more preferably 45 μm or less, and even more preferably 40 μm or less. If the thickness is 5 μm or more, the spin rate on approach shots increases, and if the thickness is 50 μm or less, the spin rate on driver shots can be suppressed.

The golf ball according to the present invention preferably has a diameter in a range from 40 mm to 45 mm. In light of satisfying the regulation of US Golf Association (USGA), the diameter is particularly preferably 42.67 mm or more. In light of prevention of air resistance, the diameter is more preferably 44 mm or less, even more preferably 42.80 mm or less. In addition, the golf ball according to the present invention preferably has a mass of 40 g or more and 50 g or less. In light of obtaining greater inertia, the mass is more preferably 44 g or more, even more preferably 45.00 g or more. In light of satisfying the regulation of USGA, the mass is particularly preferably 45.93 g or less.

When the golf ball according to the present invention has a diameter in a range from 40 mm to 45 mm, the compression deformation amount (shrinking amount along the compression direction) of the golf ball when applying a load from 98 N as an initial load to 1275 N as a final load to the golf ball is preferably 2.0 mm or more, more preferably 2.2 mm or more, and is preferably 4.0 mm or less, more preferably 3.5 mm or less. If the compression deformation amount is 2.0 mm or more, the golf ball is not excessively hard and thus the shot feeling thereof is better. On the other hand, if the compression deformation amount is 4.0 mm or less, the resilience is greater.

Fig. 2 is a partially cutaway cross-sectional view of a golf ball 1 according to one embodiment of the present invention. The golf ball 1 comprises a spherical core 2, a cover 3 covering the spherical core 2, and a paint film 4 formed on a surface of the cover 3. The paint film 4 is an outermost layer of the paint film located at the outermost layer of the golf ball. A plurality of dimples 31 are formed on the surface of the cover 3. Other portions than the dimples 31 on the surface of the cover 3 are lands 32. The paint film 4 is single layered.

Fig. 3 is a schematic enlarged view showing a part of a golf ball having a paint film including a porous filler. The golf ball 1 comprises a spherical core 2, a cover 3 covering the spherical core 2, and a paint film 4 formed on a surface of the cover 3. The paint film 4 is an outermost layer of the paint film located at the outermost layer of the golf ball. A plurality of dimples 31 are formed on the surface of the cover 3. Other portions than the dimples 31 on the surface of the cover 3 are lands 32. The paint film 4 is single layered. The paint film 4 includes a base resin and a porous filler 5 containing 50 mass % or more of $SiO_2$ as a constituent component. Although the porous filler 5 exists inside the paint film 4 without being exposed on the paint film surface in Fig. 3, the porous filler 5 may be exposed on the paint film surface.

## EXAMPLES

Next, the present invention will be described in detail by way of examples. However, the present invention is not limited to the examples described below. Various changes and modifications without departing from the spirit of the present invention are included in the scope of the present invention.

[Evaluation method]

(1) Slab hardness (Shore D hardness)

Sheets with a thickness of about 2 mm were produced by injection molding the intermediate layer composition or cover composition. The sheets were stored at 23 °C for two weeks. At least three of these sheets were stacked on one another so as not to be affected by the measuring substrate on which the sheets were placed, and the hardness of the stack was measured with an automatic hardness tester (Digitest II available from Bareiss company) using a detector of "Shore D".

(2) Thickness of paint film (μm)

The golf ball was cut into two hemispheres, and the cross section of the paint film on the hemisphere was observed with a microscope (VHX-1000 available from Keyence Corporation) to obtain the thickness of the paint film.

The measuring location of the film thickness will be explained by reference to Fig. 4, 5. Fig. 4 is a schematic figure of a cross section of a golf ball. As shown in Fig. 5, on the cross section of the golf ball, a straight line A passing a central point of the ball and a bottom of any dimple, a straight line B perpendicular to the straight line A, and a straight line C having an angle of 45 ° with the straight line A are prepared, and intersection points of these straight lines with the paint film surface are adopted as a pole P, an equator E and a shoulder S, respectively.

Fig. 5 is a schematic figure of a cross section passing a bottom De of a dimple 31 and a central point of a golf ball 1. The bottom De of the dimple 31 is the deepest location of the dimple 31. An edge Ed is a point of tangency of the dimple 31 with a tangent T, wherein the tangent T is drawn by connecting both sides of the dimple 31. A measuring location Y on an inclined plane is a point at which a perpendicular line intersects with the inclined plane of the dimple, wherein the perpendicular line is drawn from a midpoint of a straight line connecting the bottom De of the dimple and the edge Ed downward to the dimple 31. A measuring location X on a land is a midpoint between edges of adjacent dimples. It is noted that in the case that adjacent dimples contact each other so that no land exists, or in the case that the land is so narrow that the thickness is hard to be measured, the bottom, edge or inclined plane of the dimple is adopted as the measuring point.

In the measurement, test samples were firstly prepared from three locations of six balls, i.e. the dimple where the pole P exists, the dimple near the equator E and the dimple near the shoulder S. Next, regarding each test piece (dimple), the thickness of the paint film at the bottom De, edge Ed, inclined plane Y and land X of the dimple was measured. Finally, measuring values of six balls were averaged, and the obtained average value was adopted as the thickness of the paint film.

(3) Sliding angle

The sliding angles of the golf ball surface and sheet having the paint film formed thereon were measured.

A measuring sample sheet was prepared by forming the paint film on a slab formed from the cover composition. Specifically, pellets of the cover composition were fully filled into a mold having a thickness of 2 mm, and compression molded at 170 °C for 5 minutes. After being cooled, the slab was ejected from the mold. The surface of the slab was treated with sandblast. After that, a spray coating method using an air gun was used to apply the paint such that the dried paint film had a desired thickness.

The sliding angle was measured with a sliding contact angle meter (DMo-501SA available from Kyowa Interface Science, Inc.). The measuring conditions were as follows. In the measurement for the golf ball, water was dripped at the center of the dimple having a maximum diameter.

Measuring method: sliding method
Analysis method: curve fitting method (section: 60 dots)
Field of view: WIDE1
Water amount: 19 ± 1 μL (needle being used: stainless steel needle 15G)
Sliding condition: 0 to 90 ° (2.0 ° per second, continuous tilting)
Sliding and moving decision distance: tilt angle when moving at least 3 dots

In addition, the adhesion energy ($mJ/m^2$) was calculated from the measuring values of the golf ball, using the following formula. It is noted that r is a contact radius, w is a droplet mass, g is gravitational acceleration, and $\alpha$ is a sliding angle.

$$\text{Adhesion energy} = (w \times g \times \sin\alpha)/(2 \times \pi \times r)$$

(4) Loss tangent (tanδ)

The storage modulus E' (Pa), loss modulus E" (Pa) and loss tangent (tanδ) of the paint film were measured under the following conditions.

Apparatus: Dynamic viscoelasticity measuring apparatus (Rheogel-E4000 available from UBM CO., Ltd.)
Test sample: A paint obtained by blending the polyisocyanate composition and the polyol composition was dried and cured at 40 °C for 4 hours to prepare a paint film having a thickness ranging from 0.11 mm to 0.14 mm. The paint film was cut to prepare a test piece having a width of 4 mm and a distance between the clamps of 20 mm.
Measuring mode: tensile mode
Measuring temperature: -100 °C to 150 °C.
Temperature increase rate: 4 °C /min
Measuring date capturing interval: 4 °C
Oscillation frequency: 10 Hz
Measuring strain: 0.1%

(5) 10% Elastic modulus of paint film

The tensile properties of the paint film were measured according to JIS K7161 (2014). Specifically, the polyisocyanate composition and the polyol composition were blended to prepare a paint, and the obtained paint was dried and cured at 40 °C for 4 hours to prepare a paint film (thickness: 0.05 mm). The paint film was punched into the test piece type II (width of parallel part: 10 mm, gauge length: 50 mm) prescribed in JIS K7127 (1999), to prepare a test piece. The tensile test of the test piece was conducted with a precision universal tester (Autograph (registered trademark) available from Shimadzu Corporation) under testing conditions of a length between grips: 100 mm, a tensile speed: 50 mm/min and a testing temperature: 23 °C, and the tensile stress at 10% strain (10% elastic modulus) was recorded.

(6) Dynamic friction coefficient

The dynamic friction coefficient of the golf ball was measured under the following conditions. It is noted that in the following conditions, the load is small and the moving speed is low, thus the dynamic friction coefficient of the outermost paint film layer can be measured.

- Tester: Tribo Master TL201TS (available from Trinity-Lab Inc.)
- Test sample: golf ball
- Face plate: A plate made of stainless steel (HT1770 (size: 50 mm × 150 mm × thickness 2 mm) available from Nippon Steel Nisshin Co., Ltd.) and having a face surface with an arithmetic mean roughness Ra of 2.9 μm and a maximum height mean value Ry of 21.7 μm was used.
- Preparation method of face plate: The face plate was obtained by performing an air-blast treatment to the stainless steel. As the grinding material, a mixture of alumina powder (#60) and steel ball (ES300 available from Ervin industries Co., Ltd.) in a mixing ratio of 1: 1 was used. The blasting conditions were: a distance of 10 cm between the face plate and the nozzle, and a pressure of 4 to 6 $kg/cm^2$ just before the nozzle.
- Measuring method of Ra and Ry: Ra and Ry were measured with a surface roughness tester (SJ-301 available from Mitutoyo Corporation) by a method based on JIS B 0601-1994. Ra, Ry were each an average value of the values obtained at six measuring points. In addition, the cutoff value λc was 2.5 mm.
- Temperature: 23 °C
- Ball moving speed: 2 mm/s
- Load: 1.96 N (200 gf)
- Measurement method: The ball was fixed with a chuck, and allowed to move at a predetermined speed on a flat plate in a state that 200 gf of a load was applied on the ball, to measure the dynamic friction force.
- Measuring item: dynamic friction (average value in the section of from 2-10 mm)

(7) Spin rate under a wet condition

A sand wedge (trade name: "CG 15 forged wedge", loft angel: 58°, available from Cleveland Golf Inc.) was installed on a swing machine available from Golf Laboratories, Inc. The golf ball was hit at a head speed of 16 m/s when

the club face and the golf ball were in a state of being wet with water, and the spin rate (rpm) thereof was measured by continuously taking a sequence of photographs of the hit golf ball. The measurement was conducted ten times for each golf ball, and the average value thereof was adopted as the spin rate.

(8) Spin rate under a condition that there is grass between the golf ball and the club face

A sand wedge (trade name: "CG 15 forged wedge", loft angel: 58°, available from Cleveland Golf Inc.) was installed on a swing machine available from Golf Laboratories, Inc. The golf ball was hit at a head speed of 16 m/s, and the spin rate (rpm) thereof was measured by continuously taking a sequence of photographs of the hit golf ball. It is noted that two leaves (length: about 3 cm) of wild grass were attached to the golf ball that was the testing object, and the golf ball was hit such that there was the wild grass between the club face and the golf ball. The measurement was conducted ten times for each golf ball, and the average value thereof was adopted as the spin rate.

(9) Stain resistance

A sand wedge (trade name: "CG 15 forged wedge", loft angel: 58°, available from Cleveland Golf Inc.) was installed on a swing machine available from Golf Laboratories, Inc. The golf ball set in the bunker was hit at a head speed of 16 m/s. Each golf ball was hit ten times. The golf ball after the hitting was observed visually by 20 golfer players. The number of the players who answered that he or she was conscious of stain was accounted, and the stain resistance was evaluated according to the following standard.

A: 5 persons or less
B: 6 persons or more and 10 persons or less
C: 11 persons or more and 15 persons or less
D: 16 persons or more

1. Production of spherical core

According to the formulation shown in Table 1, the rubber composition was kneaded, and heat-pressed at the temperature of 150 °C for 19 mins. in upper and lower molds, each having a hemispherical cavity, to obtain a spherical core having a diameter of 39.7 mm. It is noted that the amount of barium sulfate was adjusted such that the ball had a mass of 45.6 g.

Table 1

| Core composition | | |
|---|---|---|
| Formulation (parts by mass) | Polybutadiene rubber | 100 |
| | Zinc acrylate | 35 |
| | Zinc oxide | 5 |
| | Barium sulfate | Appropriate amount |
| | Diphenyl disulfide | 0.5 |
| | Dicumyl peroxide | 0.9 |
| Polybutadiene rubber: "BR730 (high-cis polybutadiene)" available from JSR Corporation<br>Zinc acrylate: "ZN-DA90S" available from Nisshoku Techno Fine Chemical Co., Ltd.<br>Zinc oxide: "Ginrei R" available from Toho Zinc Co., Ltd.<br>Barium sulfate: "Barium Sulfate BD" available from Sakai Chemical Industry Co., Ltd.<br>Diphenyl disulfide: available from Sumitomo Seika Chemicals Co., Ltd.<br>Dicumyl peroxide: "Percumyl (register trademark) D" available from NOF Corporation | | |

2. Preparation of intermediate layer composition and cover composition

According to the formulations shown in Tables 2 and 3, the materials were mixed with a twin-screw kneading extruder to prepare the intermediate layer composition and the cover composition in a pellet form. The extruding conditions were a screw diameter of 45 mm, a screw rotational speed of 200 rpm, and a screw L/D = 35, and the mixture was heated to 160 °C to 230 °C at the die position of the extruder.

Table 2

| Intermediate layer composition | | |
|---|---|---|
| Formulation (parts by mass) | Surlyn 8945 | 55 |
| | Himilan AM7329 | 45 |
| | Titanium dioxide | 4 |
| Hardness (Shore D) | | 65 |
| Himilan (registered trademark) AM7329: zinc ion-neutralized ethylene-methacrylic acid copolymer ionomer resin available from Dow-Mitsui Polychemicals Co., Ltd.<br>Surlyn 8945: sodium ion-neutralized ethylene-methacrylic acid copolymer ionomer resin available from E.I. du Pont de Nemours and Company | | |

Table 3

| Cover composition | | |
|---|---|---|
| Formulation (parts by mass) | Elastollan XNY82A | 100 |
| | TINUVIN 770 | 0.2 |
| | Titanium dioxide | 4 |
| | Ultramarine blue | 0.04 |
| Hardness (Shore D) | | 29 |
| Elastollan NY82A: thermoplastic polyurethane elastomer available from BASF Japan Ltd.<br>TINUVIN 770: hindered amine-based light stabilizer available from BASF Japan Ltd. | | |

3. Molding of intermediate layer

The above obtained intermediate layer composition was directly injection molded on the above obtained spherical core, to form the intermediate layer (thickness: 1.0 mm) covering the spherical core.

4. Preparation of reinforcing layer

A reinforcing layer composition (trade name "Polin (registered trademark) 750LE" available from Shinto Paint Co. Ltd.) having a two-component curing type epoxy resin as a base resin was prepared. The base material contains 30 parts by mass of a bisphenol A type solid epoxy resin and 70 parts by mass of a solvent. The curing agent contains 40 parts by mass of a modified polyamide amine, 5 parts by mass of titanium dioxide and 55 parts by mass of a solvent. The mass ratio of the base material to the curing agent was 1/1. The reinforcing layer composition was applied to the surface of the intermediate layer with an air gun and kept at an atmosphere of 23 °C for 12 hours, to form the reinforcing layer. The reinforcing layer had a thickness of 7 μm.

5. Molding of cover

The cover composition in a pellet form was charged into each of the depressed part of the lower mold of a half shell molding mold, and applying a pressure to mold half shells. The spherical body having the reinforcing layer formed thereon was concentrically covered with two of the half shells. The spherical body and half shells were charged into a final mold provided with a plurality of pimples on the cavity surface. The cover (thickness: 0.5 mm) was formed by compression molding, and the golf ball bodies were obtained. A plurality of dimples having an inverted shape of the pimples were formed on the cover.

6. Preparation of paint

Preparation of polyol composition No. 1 (polyrotaxane composition)

As resin components, 50 parts by mass of the polyrotaxane, 28 parts by mass of the polycaprolactone polyol, and 22 parts by mass of the vinyl chloride-vinyl acetate-vinyl alcohol copolymer were blended. A solvent (a mixed solvent of xylene/methyl ethyl ketone = 70/30 (mass ratio)) was added therein in an amount of 100 parts by mass with respect to 100 parts by mass of the resin components, to prepare the polyol composition No. 1. It is noted that dibutyltin dilaurate was added therein as a catalyst in an amount of 0.1 mass % with respect to 100 mass % of the resin components in the polyol composition.

Polyrotaxane: "SeRM (registered trademark) super polymer SH3400P (a polyrotaxane having a cyclodextrin, at least a part of hydroxyl groups of the cyclodextrin being modified with a caprolactone chain via a -O-$C_3H_6$-O- group, a linear molecule of polyethylene glycol and a blocking group of an adamantyl group; molecular weight of linear molecule: 35,000; hydroxyl value of polyrotaxane: 72 mg KOH/g; total molecular weight of polyrotaxane: 700,000 in weight average molecular weight)" available from Advanced Softmaterials Inc.
Polycaprolactone polyol: "Placcel (registered trademark) 308" (hydroxyl value: 190 to 200 mg KOH/g) available from Daicel Corporation
Vinyl chloride-vinyl acetate-vinyl alcohol copolymer: "Solbin (registered trademark) AL" (hydroxyl value: 63.4 mg KOH/g) available from Nissin Chemical Industry Co., Ltd.

Preparation of polyol compositions No. 2 to No. 4

According to the formulations shown in Table 4, polytetramethylene ether glycol (PTMG) and trimethylolpropane (TMP) were dissolved as the first polyol component in a solvent (toluene and methyl ethyl ketone). Dibutyltin dilaurate was added as a catalyst into the above prepared solution in an amount of 0.1 mass % with respect to 100 mass % of the resin component in the polyol composition. While keeping the temperature of the polyol solution at 80 °C, isophorone diisocyanate (IPDI) was added dropwise as the first polyisocyanate component to the polyol solution and mixed. After finishing the addition of isophorone diisocyanate, stirring was continued until the isocyanate group disappeared. Then, the reaction liquid was cooled to the room temperature to prepare the urethane polyol (solid component content: 60 mass %). The composition and the like of the obtained urethane polyol are shown in Table 4.

Table 4

| Polyol composition | No. | 2 | 3 | 4 |
|---|---|---|---|---|
| Material | Molecular weight | Molar ratio | | |
| PTMG 650 | 650 | - | 1 | - |
| PTMG 1000 | 1000 | 1 | - | - |
| PTMG 1500 | 1500 | - | - | 1 |
| TMP | 134.2 | 1.25 | 1.25 | 1.25 |
| IPDI | 222.3 | 1.72 | 1.72 | 1.72 |
| Weight average molecular weight | | 6600 | 4860 | 9130 |

6. Formation of paint film

According to the formulations shown in Tables 5 to 8, the polyol composition and the polyisocyanate composition were blended to prepare curing type paint compositions. The surface of the golf ball bodies obtained above was treated with sandblast and marked. The paint was applied with a spray gun, and dried for 24 hours in an oven at the temperature of 40 °C to obtain golf balls having a diameter of 42.7 mm and a mass of 45.6 g. The thickness of the paint films ranged from 10 μm to 40 μm. It is noted that when a filler was added, the filler was added into the polyol composition in predetermined parts by mass with respect to 100 parts by mass of the base resin constituting the paint film.
As the polyisocyanate and the filler, the following materials were used.

Adduct-modified product of HDI: adduct-modified product of hexamethylene diisocyanate (Duranate (registered trademark) E402-80B (NCO amount: 7.3 %) available from Asahi Kasei Chemicals Corporation)

Biuret-modified product of HDI: biuret-modified product of hexamethylene diisocyanate (Duranate (registered trademark) 21S-75E (NCO amount: 15.5 %) available from Asahi Kasei Chemicals Corporation)
Isocyanurate-modified product of HDI: isocyanurate-modified product of hexamethylene diisocyanate (Duranate TKA-100 (NCO amount: 21.7 %) available from Asahi Kasei Chemicals Corporation)
Isocyanurate-modified product of IPDI: isocyanurate-modified product of isophorone diisocyanate (VESTANAT (registered trademark) T1890 (NCO amount: 12.0 %) available from Degussa Co., Ltd.)
Diatomaceous earth: "Radiolite F" (volume average particle size: 7 μm, bulk density: 0.40 g/$cm^3$) available from Showa Chemical Industry Co., Ltd.
Zeolite: "Molecular sieve 13X POWDER" (volume median size: 8.7 μm, bulk density: 0.5 g/$cm^3$) available from Union Showa K.K.
Talc: "P8" (volume average particle size: 3.3 μm, bulk density: 0.12 g/$cm^3$) available from Nippon Talc Co., Ltd.

Table 5

| Golf ball No. | | | 1 | 2 | 3 | 4 | 5 | 6 | 7 | 8 | 9 |
|---|---|---|---|---|---|---|---|---|---|---|---|
| Paint composition | Polyol composition (parts by mass) | Polyol composition No. 1 | 0 | 2 | 5 | 8 | 10 | 12 | 15 | 18 | 20 |
| | | Polyol composition No. 2 | 100 | 98 | 95 | 92 | 90 | 88 | 85 | 82 | 80 |
| | | Polyol composition No. 3 | - | - | - | - | - | - | - | - | - |
| | | Polyol composition No. 4 | - | - | - | - | - | - | - | - | - |
| | Polyisocyanate composition (parts by mass) | Isocyanurate-modified product of HDI | 100 | 100 | 100 | 100 | 100 | 100 | 100 | 100 | 100 |
| | | Adduct-modified product of HDI | - | - | - | - | - | - | - | - | - |
| | | Biuret-modified product of HDI | - | - | - | - | - | - | - | - | - |
| | | Isocyanurate-modified product of IPDI | - | - | - | - | - | - | - | - | - |
| | Amount of polyrotaxane in polyol component (mass %) | | 0 | 1 | 2.5 | 4 | 5 | 6 | 7.5 | 9 | 10 |
| | Mixing ratio (NCO/OH molar ratio) | | 1.2 | 1.2 | 1.2 | 1.2 | 1.2 | 1.2 | 1.2 | 1.2 | 1.2 |
| Golf ball index evaluation | | Spin rate under a condition that there is grass between the golf ball and the club face (rpm) | 3821 | 3856 | 3891 | 3951 | 4058 | 4026 | 4005 | 3955 | 3920 |
| | | Stain resistance | A | A | A | A | A | A | A | A | C |

Amount: resin component (excluding solvent)

Table 6

| | | | 10 | 11 | 12 | 13 | 14 | 15 | 16 | 17 | 18 |
|---|---|---|---|---|---|---|---|---|---|---|---|
| Golf ball No. | | | 10 | 11 | 12 | 13 | 14 | 15 | 16 | 17 | 18 |
| Paint composition | Polyol composition (parts by mass) | Polyol composition No. 1 | 30 | 10 | 10 | 10 | 10 | 10 | 10 | 6 | 0 |
| | | Polyol composition No. 2 | 70 | 90 | 90 | 90 | 90 | - | - | - | - |
| | | Polyol composition No. 3 | - | - | - | - | - | 90 | - | 94 | 100 |
| | | Polyol composition No. 4 | - | - | - | - | - | - | 90 | - | - |
| | Polyisocyanate composition (parts by mass) | Isocyanurate-modified product of HDI | 100 | - | - | 70 | - | 100 | 100 | 30 | 30 |
| | | Adduct-modified product of HDI | - | 100 | - | - | - | - | - | - | - |
| | | Biuret-modified product of HDI | - | - | 100 | - | - | - | - | 30 | 30 |
| | | Isocyanurate-modified product of IPDI | - | - | - | 30 | 100 | - | - | 40 | 40 |
| | Amount of polyrotaxane in polyol component (mass %) | | 15 | 5 | 5 | 5 | 5 | 5 | 5 | 3 | 0 |
| | Mixing ratio (NCO/OH molar ratio) | | 1.2 | 1.3 | 1.3 | 1.2 | 0.6 | 1 | 1.6 | 0.6 | 0.6 |
| Golf ball index evaluation | | Spin rate under a condition that there is grass between the golf ball and the club face (rpm) | 3884 | 4042 | 4039 | 3985 | 3843 | 3849 | 3902 | 3840 | 3788 |
| | | Stain resistance | D | A | A | A | A | A | B | A | A |

Amount: resin component (excluding solvent)

Table 7-1

| | | | 19 | 20 | 21 | 22 | 23 | 24 |
|---|---|---|---|---|---|---|---|---|
| Golf ball No. | | | 19 | 20 | 21 | 22 | 23 | 24 |
| Paint composition | Polyol composition (parts by mass) | Polyol composition No. 1 | 0 | 2 | 5 | 8 | 10 | 10 |
| | | Polyol composition No. 2 | 100 | 98 | 95 | 92 | 90 | 90 |
| | | Polyol composition No. 3 | - | - | - | - | - | - |
| | | Polyol composition No. 4 | - | - | - | - | - | - |
| | Polyisocyanate composition (parts by mass) | Isocyanurate-modified product of HDI | 100 | 100 | 100 | 100 | 100 | 100 |
| | | Adduct-modified product of HDI | - | - | - | - | - | - |
| | | Biuret-modified product of HDI | - | - | - | - | - | - |
| | | Isocyanurate-modified product of IPDI | - | - | - | - | - | - |
| | Amount of polyrotaxane in polyol component (mass %) | | 0 | 1 | 2.5 | 4 | 5 | 5 |
| | Mixing ratio (NCO/OH molar ratio) | | 1.2 | 1.2 | 1.2 | 1.2 | 1.2 | 1.2 |
| | Filler (parts by mass) | Type | Zeolite | Zeolite | Zeolite | Zeolite | - | Zeolite |
| | | Character | Porous | Porous | Porous | Porous | - | Porous |
| | | Amount of $SiO_2$ (mass %) | 69-70 | 69-70 | 69-70 | 69-70 | - | 69-70 |
| | | Amount (relative to base resin) | 3 | 3 | 3 | 3 | - | 1 |
| Golf ball index evaluation | | Spin rate under a condition that there is grass between the golf ball and the club face (rpm) | 3874 | 3908 | 3942 | 4006 | 4058 | 4072 |
| | | Spin rate under a wet condition (rpm) | 2372 | 2410 | 2441 | 2461 | 2331 | 2410 |
| | | Stain resistance | A | A | A | A | A | A |

Amount: resin component (excluding solvent)

Table 7-2

| | | Golf ball No. | 25 | 26 | 27 | 28 | 29 | 30 |
|---|---|---|---|---|---|---|---|---|
| Paint composition | Polyol composition (parts by mass) | Polyol composition No. 1 | 10 | 10 | 10 | 10 | 10 | 12 |
| | | Polyol composition No. 2 | 90 | 90 | 90 | 90 | 90 | 88 |
| | | Polyol composition No. 3 | - | - | - | - | - | - |
| | | Polyol composition No. 4 | - | - | - | - | - | - |
| | Polyisocyanate composition (parts by mass) | Isocyanurate-modified product of HDI | 100 | 100 | 100 | 100 | 100 | 100 |
| | | Adduct-modified product of HDI | - | - | - | - | - | - |
| | | Biuret-modified product of HDI | - | - | - | - | - | - |
| | | Isocyanurate-modified product of IPDI | - | - | - | - | - | - |
| | Amount of polyrotaxane in polyol component (mass %) | | 5 | 5 | 5 | 5 | 5 | 6 |
| | Mixing ratio (NCO/OH molar ratio) | | 1.2 | 1.2 | 1.2 | 1.2 | 1.2 | 1.2 |
| | Filler (parts by mass) | Type | Zeolite | Zeolite | Zeolite | Diatomaceous earth | Talc | Zeolite |
| | | Character | Porous | Porous | Porous | Porous | Non-porous | Porous |
| | | Amount of $SiO_2$ (mass %) | 69-70 | 69-70 | 69-70 | 80 | - | 69-70 |
| | | Amount (relative to base resin) | 3 | 5 | 10 | 3 | 3 | 3 |
| Golf ball index evaluation | | Spin rate under a condition that there is grass between the golf ball and the club face (rpm) | 4101 | 4132 | 4188 | 4088 | 4075 | 4068 |
| | | Spin rate under a wet condition (rpm) | 2480 | 2520 | 2598 | 2462 | 2422 | 2488 |
| | | Stain resistance | A | A | A | A | A | A |

Amount: resin component (excluding solvent)

Table 8-1

| | | | 31 | 32 | 33 | 34 | 35 | 36 |
|---|---|---|---|---|---|---|---|---|
| | | Golf ball No. | 31 | 32 | 33 | 34 | 35 | 36 |
| Paint composition | Polyol composition (parts by mass) | Polyol composition No. 1 | 15 | 18 | 20 | 30 | 10 | 10 |
| | | Polyol composition No. 2 | 85 | 82 | 80 | 70 | 90 | 90 |
| | | Polyol composition No. 3 | - | - | - | - | - | - |
| | | Polyol composition No. 4 | - | - | - | - | - | - |
| | Polyisocyanate composition (parts by mass) | Isocyanurate-modified product of HDI | 100 | 100 | 100 | 100 | - | - |
| | | Adduct-modified product of HDI | - | - | - | - | 100 | - |
| | | Biuret-modified product of HDI | - | - | - | - | - | 100 |
| | | Isocyanurate-modified product of IPDI | - | - | - | - | - | - |
| | Amount of polyrotaxane in polyol component (mass %) | | 7.5 | 9 | 10 | 15 | 5 | 5 |
| | Mixing ratio (NCO/OH molar ratio) | | 1.2 | 1.2 | 1.2 | 1.2 | 1.3 | 1.3 |
| | Filler (parts by mass) | Type | Zeolite | Zeolite | Zeolite | Zeolite | Zeolite | Zeolite |
| | | Character | Porous | Porous | Porous | Porous | Porous | Porous |
| | | Amount of $SiO_2$ (mass %) | 69-70 | 69-70 | 69-70 | 69-70 | 69-70 | 69-70 |
| | | Amount (relative to base resin) | 3 | 3 | 3 | 3 | 3 | 3 |
| Golf ball index evaluation | | Spin rate under a condition that there is grass between the golf ball and the club face (rpm) | 4042 | 3998 | 3944 | 3910 | 4086 | 4078 |
| | | Spin rate under a wet condition (rpm) | 2492 | 2498 | 2508 | 2520 | 2462 | 2451 |
| | | Stain resistance | A | A | C | D | A | A |

Amount: resin component (excluding solvent)

Table 8-2

| | | | 37 | 38 | 39 | 40 | 41 | 42 |
|---|---|---|---|---|---|---|---|---|
| Golf ball No. | | | 37 | 38 | 39 | 40 | 41 | 42 |
| Paint composition | Polyol composition (parts by mass) | Polyol composition No. 1 | 10 | 10 | 10 | 10 | 6 | 0 |
| | | Polyol composition No. 2 | 90 | 90 | - | - | - | - |
| | | Polyol composition No. 3 | - | - | 90 | - | 94 | 100 |
| | | Polyol composition No. 4 | - | - | - | 90 | - | - |
| | Polyisocyanate composition (parts by mass) | Isocyanurate-modified product of HDI | 70 | - | 100 | 100 | 30 | 30 |
| | | Adduct-modified product of HDI | - | - | - | - | - | - |
| | | Biuret-modified product of HDI | - | - | - | - | 30 | 30 |
| | | Isocyanurate-modified product of IPDI | 30 | 100 | - | - | 40 | 40 |
| | Amount of polyrotaxane in polyol component (mass %) | | 5 | 5 | 5 | 5 | 3 | 0 |
| | Mixing ratio (NCO/OH molar ratio) | | 1.2 | 0.6 | 1 | 1 | 0.6 | 0.6 |
| | Filler (parts by mass) | Type | Zeolite | Zeolite | Zeolite | Zeolite | Zeolite | Zeolite |
| | | Character | Porous | Porous | Porous | Porous | Porous | Porous |
| | | Amount of $SiO_2$ (mass %) | 69-70 | 69-70 | 69-70 | 69-70 | 69-70 | 69-70 |
| | | Amount (relative to base resin) | 3 | 3 | 3 | 3 | 3 | 3 |
| Golf ball index evaluation | | Spin rate under a condition that there is grass between the golf ball and the club face (rpm) | 4022 | 3910 | 3918 | 3948 | 3901 | 3834 |
| | | Spin rate under a wet condition (rpm) | 2412 | 2376 | 2388 | 2396 | 2366 | 2286 |
| | | Stain resistance | A | A | A | B | A | A |

Amount: resin component (excluding solvent)

The application of the paint was conducted as follows. The golf ball body was placed in a rotating member provided with prongs, and the rotating member was allowed to rotate at 300 rpm. The application of the paint was conducted by spacing a spray distance (7 cm) between the air gun and the golf ball body, and moving the air gun in an up and down direction. The painting interval in the overpainting operation was set to 1.0 second. The application of the paint was conducted under the spraying conditions of overpainting operation: twice, spraying air pressure: 0.15 MPa, compressed air tank pressure: 0.10 MPa, painting time per one application: one second, atmosphere temperature: 20 °C to 27 °C, and atmosphere humidity: 65 % or less. Evaluation results regarding the spin performance of the obtained golf balls are shown in Tables 5 and 6.

It is apparent from Tables 5 and 6 that the golf ball according to the present invention that comprises a golf ball body and a paint film composed of at least one layer and formed on a surface of the golf ball body, wherein at least one layer of the paint film includes, as a base resin, a polyurethane obtained by a reaction between a polyisocyanate composition and a polyol composition, the polyol composition contains, as a polyol component, a polyrotaxane having at least two hydroxyl groups and a urethane polyol, and an amount of the polyrotaxane having at least two hydroxyl groups in the polyol component is more than 0 mass % and less than 10 mass %, has excellent spin performance on approach shots from the rough (under a condition that there is grass between the golf ball and the club face) and excellent stain resistance.

It is apparent from Tables 7 and 8 that the golf ball according to the present invention that comprises a golf ball body and a paint film composed of at least one layer and formed on a surface of the golf ball body, wherein an outermost layer of the paint film located at the outermost side of the golf ball includes a base resin and a porous filler, the base resin includes a polyurethane obtained by a reaction between a polyisocyanate composition and a polyol composition, and the polyol composition contains, as a polyol component, a polyrotaxane having at least two hydroxyl groups and a urethane polyol, has excellent spin performance on approach shots under a wet condition, excellent spin performance on approach shots under a condition that there is grass between the golf ball and the club face, and excellent stain resistance.

This application is based on Japanese patent applications No. 2020-037233 and No. 2020-037234 filed on March 4, 2020, the contents of which are hereby incorporated by reference.

## Claims

1. A golf ball comprising a golf ball body and a paint film composed of at least one layer and formed on a surface of the golf ball body, wherein at least one layer of the paint film includes, as a base resin, a polyurethane obtained by a reaction between a polyisocyanate composition and a polyol composition, and the polyol composition contains, as a polyol component, a polyrotaxane having at least two hydroxyl groups and a urethane polyol.

2. The golf ball according to claim 1, wherein an amount of the polyrotaxane having at least two hydroxyl groups in the polyol component is more than 0 mass % and less than 10 mass %.

3. The golf ball according to claim 1 or 2, wherein a polyol component constituting the urethane polyol includes at least one member selected from the group consisting of a polyether diol, a polyester diol, a polycaprolactone diol, and a polycarbonate diol.

4. The golf ball according to any one of claims 1 to 3, wherein the polyrotaxane having at least two hydroxyl groups has a cyclodextrin, a linear molecule piercing through the cyclic structure of the cyclodextrin, and blocking groups located at both terminals of the linear molecule to prevent disassociation of the cyclodextrin, wherein at least a part of hydroxyl groups of the cyclodextrin is modified with a caprolactone chain via a $-O-C_3H_6-O-$ group.

5. The golf ball according to any one of claims 1 to 4, wherein the polyisocyanate composition contains, as a polyisocyanate component, at least one member selected from the group consisting of an isocyanurate-modified product of hexamethylene diisocyanate, an adduct-modified product of hexamethylene diisocyanate, a biuret-modified product of hexamethylene diisocyanate, and an isocyanurate-modified product of isophorone diisocyanate.

6. The golf ball according to any one of claims 1 to 5, wherein the at least one layer of the paint film further includes a porous filler.

7. The golf ball according to claim 6, wherein an amount of the porous filler is 0.5 part by mass or more and 10 parts by mass or less with respect to 100 parts by mass of the base resin.

**8.** The golf ball according to claim 6 or 7, wherein the porous filler contains 50 mass % or more of $SiO_2$ as a constituent component.

**9.** The golf ball according to any one of claims 6 to 8, wherein the porous filler includes at least one member selected from the group consisting of zeolite, pearlite, and diatomaceous earth.

**10.** The golf ball according to any one of claims 1 to 9, wherein an outermost layer of the paint film located at the outermost layer of the golf ball includes the polyurethane as the base resin.

**11.** The golf ball according to any one of claims 1 to 9, wherein an outermost layer of the paint film located at the outermost layer of the golf ball includes the base resin and the porous filler.

**12.** The golf ball according to any one of claims 1 to 11, wherein the polyol composition further contains a polycaprolactone polyol and/or a hydroxy group modified vinyl chloride-vinyl acetate copolymer as the polyol component.

**13.** The golf ball according to any one of claims 1 to 12, wherein an amount of the urethane polyol in the polyol component is more than 80 mass % and less than 100 mass %.

**14.** The golf ball according to claim 12 or 13, wherein an amount of the polycaprolactone polyol in the polyol component is 0 mass % or more and 5 mass % or less, and an amount of the hydroxy group modified vinyl chloride-vinyl acetate copolymer in the polyol component is 0 mass % or more and 5 mass % or less.

**15.** The golf ball according to any one of claims 6 to 14, wherein a ratio (d/T) of a volume average particle size (d) of the porous filler to a thickness (T) of the at least one layer of the paint film is 0.01 or more and 2.0 or less.

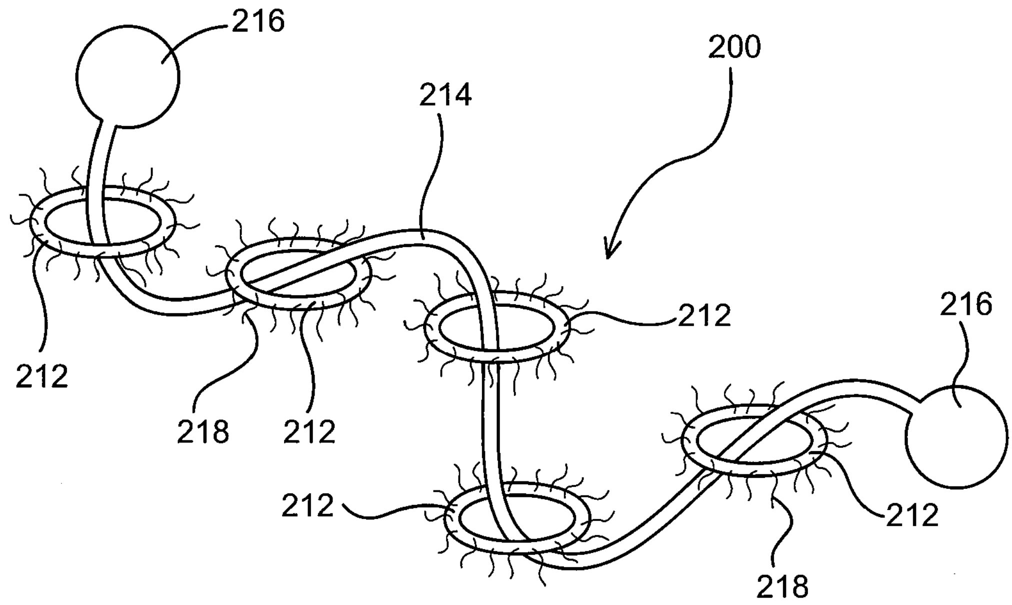


Fig. 1

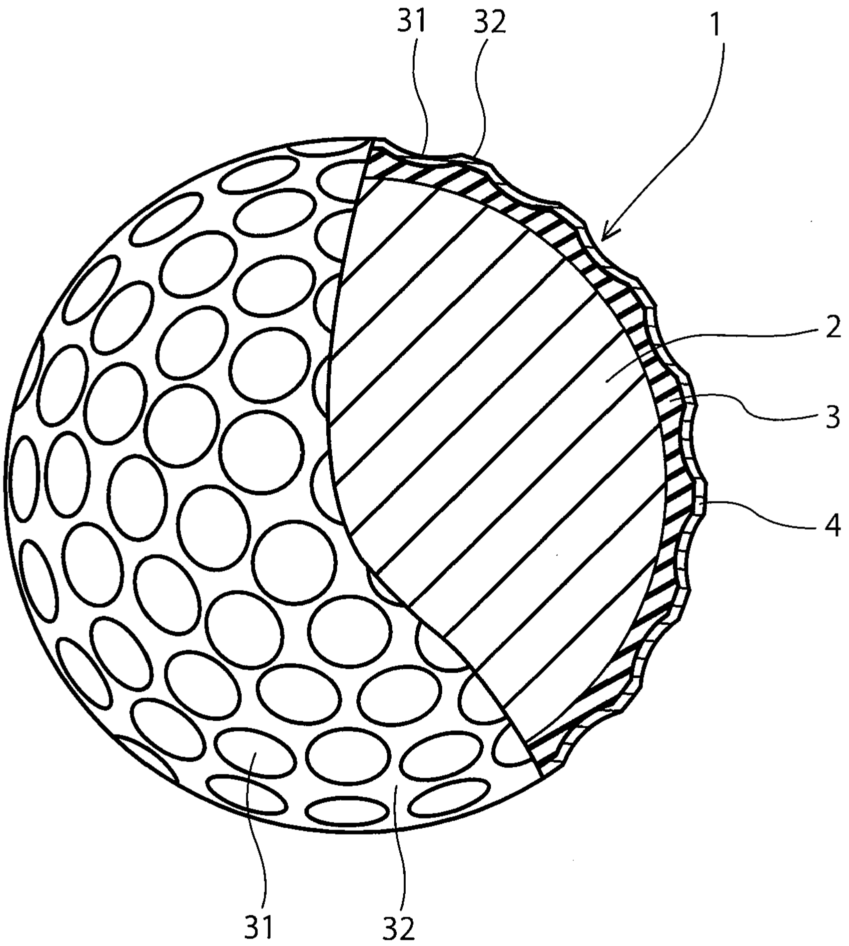


Fig. 2

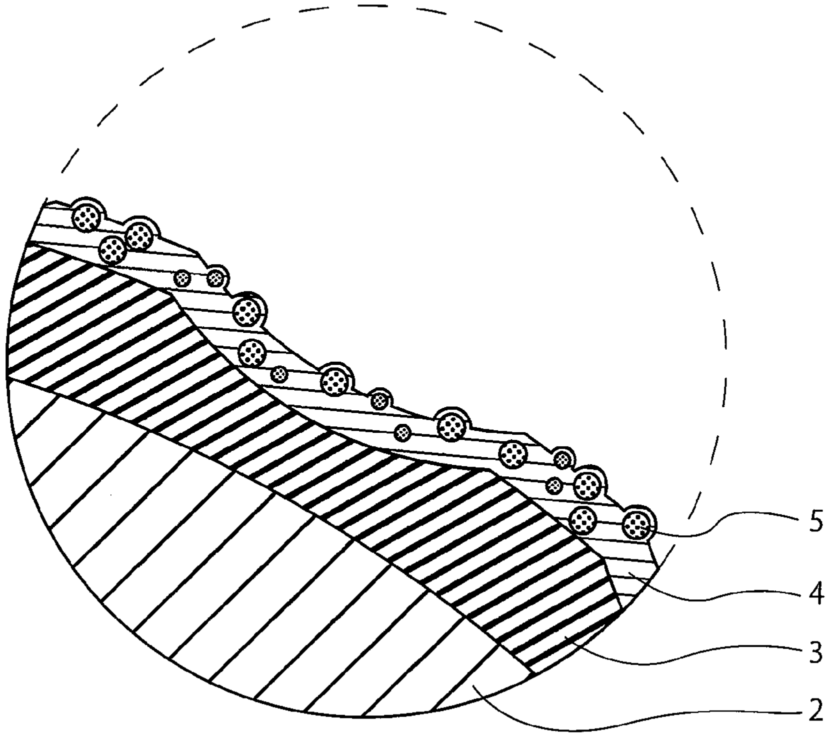


Fig. 3

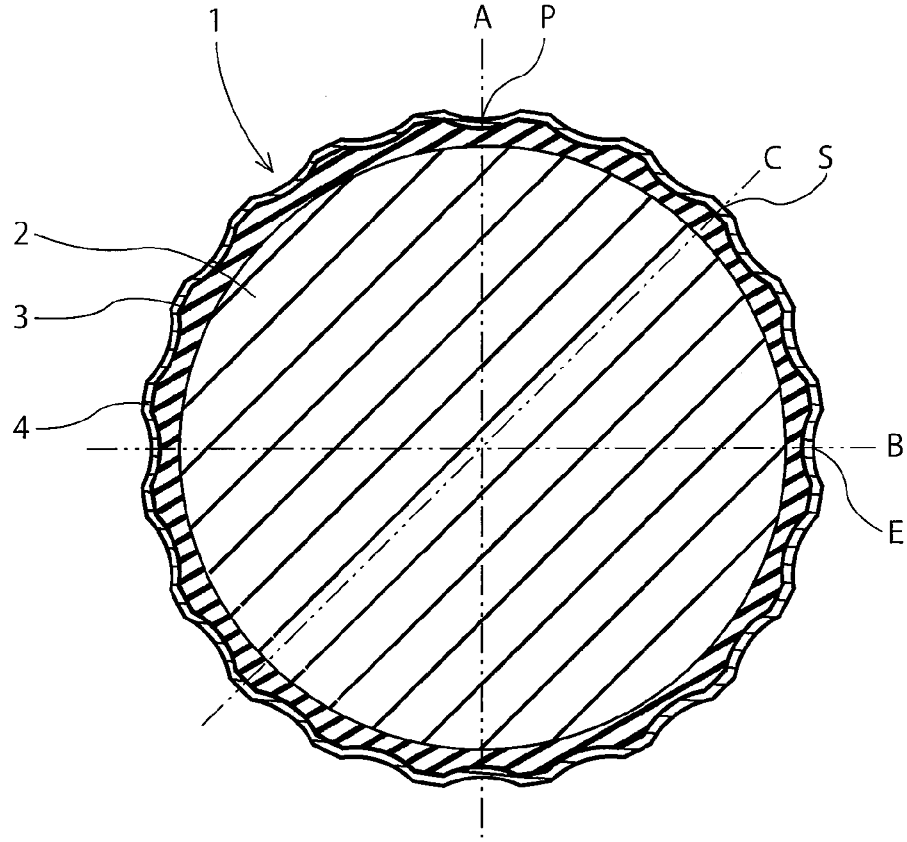


Fig. 4

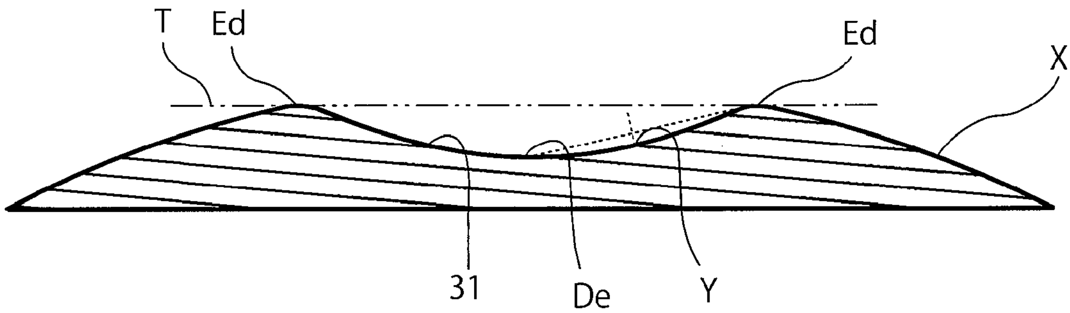


Fig. 5

Europäisches Patentamt
European Patent Office
Office européen des brevets

# EUROPEAN SEARCH REPORT

Application Number
EP 21 15 6679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/136484 A1 (INOUE HIDETAKA [JP] ET AL) 19 May 2016 (2016-05-19) | 1,3-15 | INV. C08G18/24 C08G18/32 C08G18/42 C08G18/48 C08G18/64 C08G18/66 C08G18/67 C08G18/73 C08G18/75 C08G18/78 C08G18/79 |
| A | * table 4 * ----- | 2 | |

TECHNICAL FIELDS SEARCHED (IPC)
C08G

The present search report has been drawn up for all claims

| Place of search | Date of completion of the search | Examiner |
|---|---|---|
| Munich | 5 July 2021 | Bergmeier, Martin |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 15 6679

This annex lists the patent family members relating to the patent documents cited in the above-mentioned European search report. The members are as contained in the European Patent Office EDP file on
The European Patent Office is in no way liable for these particulars which are merely given for the purpose of information.

05-07-2021

| Patent document cited in search report | Publication date | Patent family member(s) | Publication date |
|---|---|---|---|
| US 2016136484 A1 | 19-05-2016 | JP 6472217 B2 | 20-02-2019 |
| | | JP 2016093386 A | 26-05-2016 |
| | | US 2016136484 A1 | 19-05-2016 |
| | | US 2017144028 A1 | 25-05-2017 |
| | | US 2019091517 A1 | 28-03-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016093386 A
- JP 2017209298 A
- JP 2019097713 A
- JP 2019098150 A
- JP 2015126772 A
- JP 2020037233 A
- JP 2020037234 A